# EUROPÄISCHE PATENTSCHRIFT

(11) **EP 0 610 852 B1**
(45) Veröffentlichungstag und Bekanntmachung des Hinweises auf die Patenterteilung: **07.05.1997**
(21) Anmeldenummer: 94101805.3
(22) Anmeldetag: 07.02.1994
(51) Int. Cl.: C08F 232/08

(54) **Verfahren zur Herstellung von Cycloolefincopolymeren**
Process for preparing cyclo-olefin polymers
Procédé de préparation de copolymères de cyclo-oléfines

(30) Priorität: 12.02.1993 DE 4304287
(43) Veröffentlichungstag der Anmeldung: 17.08.1994
(73) Patentinhaber: HOECHST AKTIENGESELLSCHAFT, 65929 Frankfurt am Main (DE)
(72) Erfinder: Brekner, Michael-Joachim, Dr., D-60529 Frankfurt (DE); Osan, Frank, Dr., D-65779 Kelkheim (DE)

(56) Entgegenhaltungen:
- EP-A- 0 485 893
- EP-A- 0 503 422

## Beschreibung

Die Erfindung betrifft ein Verfahren zur Herstellung von Cycloolefincopolymeren (COC).

Es sind bereits verschiedene Verfahren zur Herstellung von COC bekannt, die auf unterschiedlichen Katalysen basieren (EP-A0-156 464, EP-A0-203 799, DD-237 070, EP-A0-355 682, EP-A0-485 893, EP-A0-503 422).

Der Nachteil dieser Katalysen liegt allerdings in der Tatsache, daß einerseits insbesondere die Metallocenverbindungen relativ teuer sind und andererseits auch relativ teure Cokatalysatoren, meistens ein besonderes Aluminiumalkyl, eingesetzt werden muß. Außerdem kommt es auch vor, daß insbesondere Metallocene, die besonders selektiv sind und sehr vorteilhafte Eigenschaftsprofile erzeugen, gleichzeitig gewisse Schwächen bei der Katalysatoraktivität (Spezifischer Monomereinbau je Zeiteinheit) aufweisen.

Die Aufgabe der vorliegenden Erfindung bestand darin, ein Verfahren zur Herstellung von COC aus cyclischen und acyclischen Olefin-Monomeren unter Verwendung eines geeigneten Katalysatorsystems bereitzustellen, das es ermöglicht, den Katalysatorverbrauch und die Cokatalysatorkosten möglichst unabhängig von dem angestrebten Eigenschaftsprofil der Cycloolefincopolymeren erheblich zu senken.

Diese Aufgabe wurde gelöst durch ein Verfahren zur Herstellung von COC aus cyclischen und acyclischen Olefin-Monomeren unter Verwendung eines Katalysatorsystems in einem Reaktionsraum, das dadurch gekennzeichnet ist, daß die Verweilzeit der Monomeren im Reaktionsraum von der Verweilzeit des Katalysatorsystems im Reaktionsraum getrennt wird. Es wird daher als "Verfahren mit getrennten (d.h. verschiedenen) Verweilzeiten" bezeichnet.

Die Trennung der Verweilzeiten der Monomeren und des Katalysatorsystems wird erstens durch die Fixierung des Katalysatorsystems auf einem Träger und zweitens durch den Einbau einer porösen Trennwand in den Reaktionsraum erreicht.

Durch die erstgenannte Maßnahme wird der Katalysator, der zusammen mit mindestens einem Cokatalysator das Katalysesystem bildet, auf einem Träger fixiert, so daß der Katalysator unter den Reaktionsbedingungen weitgehend auf dem Träger zurückgehalten wird. Die zweitgenannte Maßnahme verhindert durch den Einsatz einer porösen Trennwand, die zwar für die Polymerlösung durchlässig ist, aber weitgehend undurchlässig für den geträgerten Katalysator, den Austrag des Katalysators mit der Polymerlösung.

Der Katalysator kann mittels verschiedener Methoden auf den Träger aufgebracht werden. Bevorzugt ist ein Verfahren, das beispielsweise in der europäischen Patentanmeldung EP 92107331.8 beschrieben ist, und besonders bevorzugt ist ein neuartiges Verfahren, bei dem mit Hilfe von Mikrowellen geträgert wird (P 4304 286.4). Auf beide Schriften wird hiermit ausdrücklich Bezug genommen. Das letztgenannte Trägerungsverfahren ist dadurch gekennzeichnet, daß der Katalysator und der auf einem Trägermaterial geträgerte Cokatalysator in einer Suspensionslösung in Kontakt gebracht werden und die Fixierung des Katalysators auf das Trägermaterial unter der Einwirkung von Mikrowellen erfolgt.

Geeignete Trägermaterialien sind beispielsweise Silikagele, Aluminiumoxide, festes Aluminoxan oder andere anorganische Trägermaterialien, wie z. B. Magnesiumchlorid. Ein geeignetes Trägermaterial ist auch ein teikristallines, unter Polymerisationsbedingungen unlösliches Polyolefinpulver in feinverteilter Form.

Die Größe der Teilchen des Trägermaterials kann sehr unterschiedlich gewählt werden. Es sollte jedoch darauf geachtet werden, daß dadurch außer einer möglichst großen Belegungsoberfläche auch ein gutes Rückhaltevermögen der Trennwand sichergestellt wird. Um eine große Belegungsoberfläche bereitzustellen, werden Trägerteilchen mit mittleren Durchmessern von 5 - 250 µm bevorzugt. Besonders bevorzugt werden Größen von 10 - 120 µm. Der Teilchendurchmesser des Trägers sollte mindestens um den Faktor 5, bevorzugt um einen Faktor größer 10, größer sein als die mittlere Porenweite der porösen Trennwand im Reaktionsraum.

Bei der Auswahl der Träger sollte außer auf die chemische Beschaffenheit der Oberfläche und auf die mittlere Teilchengröße auch auf die Größenverteilung der Trägerpartikel geachtet werden. Eine möglichst enge Größenverteilung wird bevorzugt, weil damit eine bessere Anpassung der Porosität der Trennwand möglich ist. Falls trotzdem ein gewisser Feinanteil nicht zu vermeiden ist, sollte eine Aussiebung der Trägerteilchen mit einem Sieb, welches hinsichtlich der Porosität mit der Trennwand in der Reaktionszone vergleichbar ist, dem Trägerungsverfahren vorausgehen.

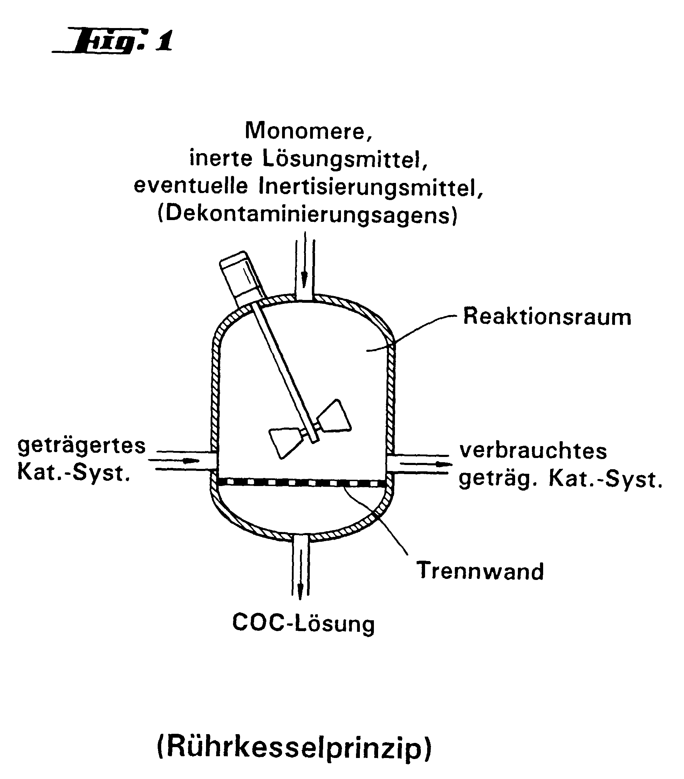

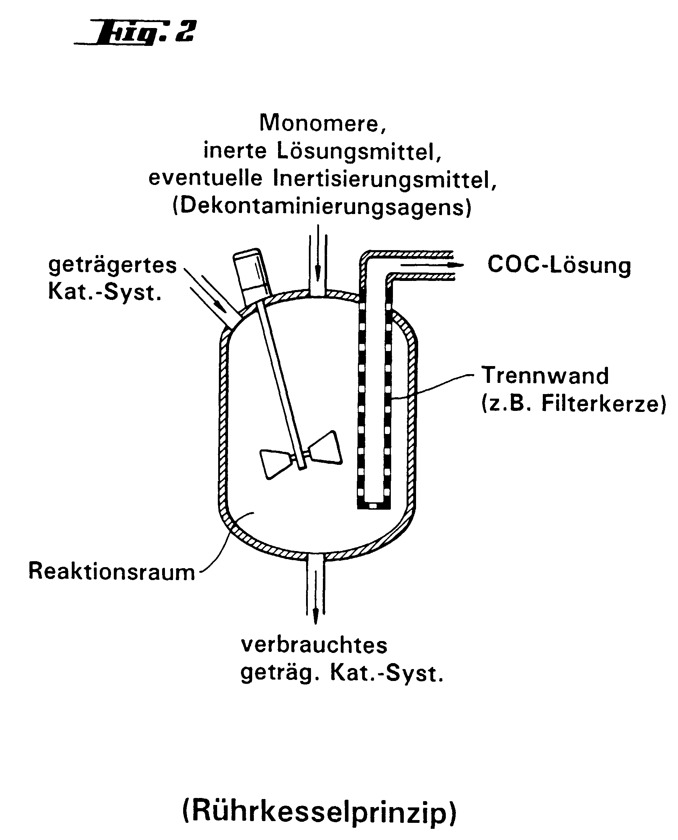

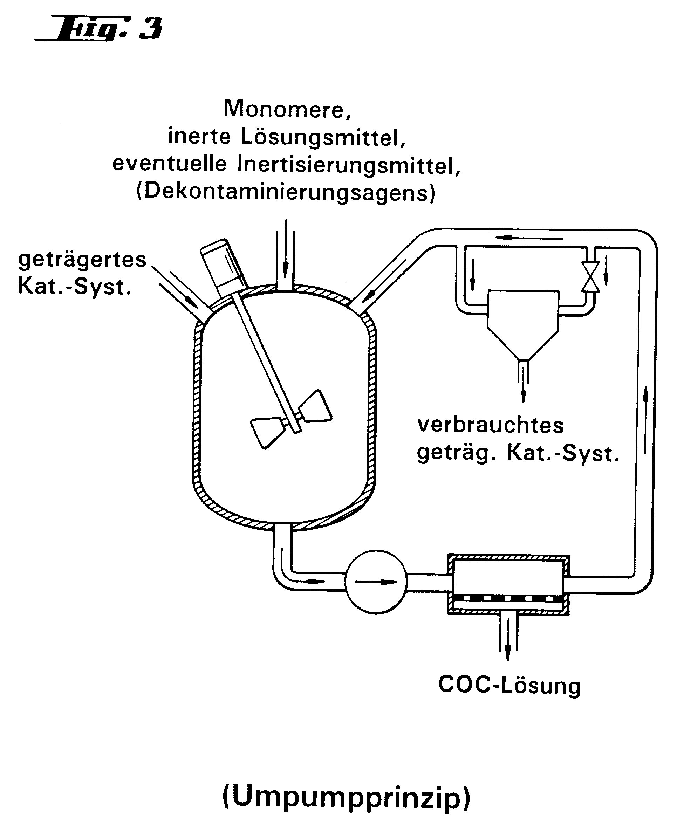

Die poröse Trennwand wird, wie in den Abbildungen 1 bis 3 schematisch gezeigt, als gestrichelte, fette Linie dargestellt. Diese Trennwand hält das geträgerte Katalysatorsystem weitgehend im Reaktionsraum zurück, während die Monomeren und das inerte Lösungsmittel ungehindert durch die Trennwand durchtreten können und als Cycloolefincopolymerlösung den Reaktor verlassen. Dadurch wird die Verweilzeit des geträgerten Katalysatorsystems im Vergleich zu der der Monomeren bzw. der des Lösungsmittel verlängert. Das Verfahren ist um so wirtschaftlicher, je länger die Verweilzeit des Katalysators im Vergleich zu der Verweilzeit des Monomeren im Reaktionsraum ist.
Je größer das Größenverhältnis zwischen der Teilchengröße des geträgerten Katalysatorsystems und der Trennwandporosität ist, um so weniger geträgerter Katalysator kann mit der Polymerlösung aus dem Reaktionsraum über die Zeit ausgetragen werden. Je nach Reaktor-Prinzip und Reaktor-Konstruktion (vgl. z. B. Abbildungen 1 bis 3) bildet sich während der Polymerisation mehr oder weniger abriebbedingter Feinanteil des geträgerten Katalysatorsystems, welches dann ausgetragen werden kann und somit die Verweilzeit des Katalysators begrenzt.

Ein weiterer entscheidender Faktor für die Verweilzeit des Katalysators ist die Stabilität der Katalysator- bzw. Cokatalysatorfixierung. Im Falle einer schlechten Fixierung löst sich das Katalysatorsystem mit der Zeit von dem Träger ab und wird dann mit der Polymerlösung ausgetragen.

Eine weitere Ursache für eine gewisse Begrenzung der Verweilzeit des Katalysators kann auch eine mit der Zeit zunehmende Kontamination des Katalysators sein. Dessen Verweilzeit nimmt insbesondere dann schnell ab, wenn die zugeführten Monomere und Lösungsmittel geringfügige Verunreinigungen aufweisen. Vorzugsweise werden diese deshalb mit einem Inertisierungsreagens dekontaminiert.

Die Trennwand kann verschiedene Formen haben und auf verschiedene Reaktor-Konstruktionen angewandt werden (vgl. Abbildungen 1 bis 3). Der Reaktionsraum kann auch aus mehreren Reaktionszonen zusammengesetzt sein, die sich dadurch auszeichnen, daß unterschiedliche Polymerisationsbedingungen in den einzelnen Reaktionszonen herrschen.

Die Trennwand kann aus unterschiedlichen porösen Materialien aufgebaut sein. Beispielsweise können solche Trennwände aus keramischen Filterplatten, gewobenen Metallfiltern, Metallvliesen, mehrschichtig aufgebauten Filtern, die Gewebe und Vliese enthalten können, gefertigt werden. Die mittlere Porosität sollte zwischen 0,1 und 50µm, bevorzugt zwischen 0,25 und 20 µm und besonders bevorzugt zwischen 2 und 10 µm liegen. Die Porengrößenverteilung sollte möglichst eng sein.

Das erfindungsgemäße Verfahren kann kontinuierlich oder diskontinuierlich betrieben werden. Bevorzugt wird ein kontinuierlicher Betrieb, bei dem Katalysator und Monomere bzw. Lösungsmittel kontinuierlich zugegeben werden und die Polymerlösung und Teile des sogenannten "verbrauchten Katalysators" kontinuierlich aus dem Reaktor ausgetragen werden.

Zur Synthese von COC nach dem erfindungsgemäßen Verfahren können als Monomere 0,1 bis 99,9 Gew.-%, bezogen auf die Gesamtmenge der Monomeren, mindestens eines Monomers der Formeln I, II, III oder IV 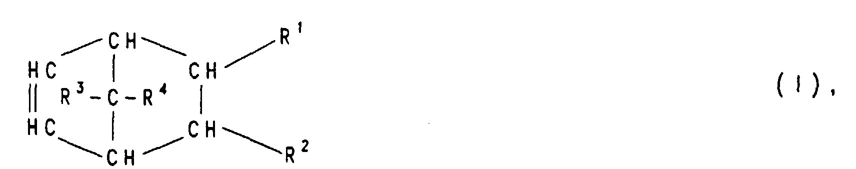 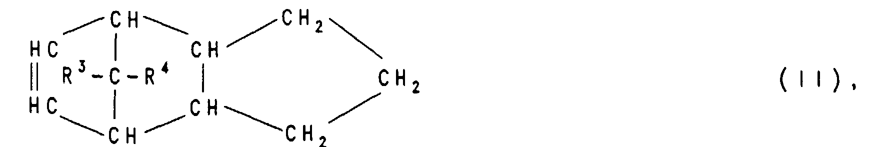 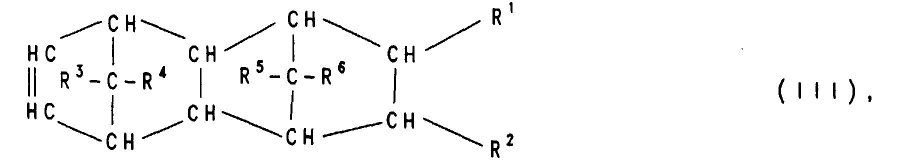 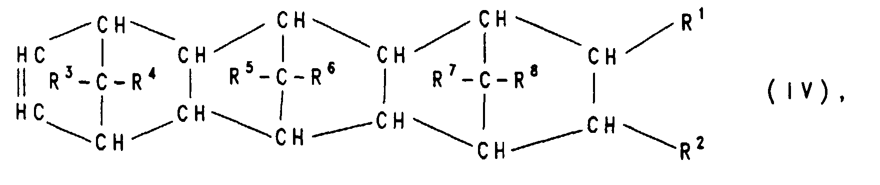 worin R¹, R², R³, R⁴, R⁵, R⁶, R⁷ und R⁸ gleich oder verschieden sind und ein Wasserstoffatom oder einen C₁-C₈-Alkylrest oder Arylrest bedeuten, wobei gleiche Reste in den verschiedenen Formeln eine unterschiedliche Bedeutung haben können, 0,1 bis 99,9 Gew.-%, bezogen auf die Gesamtmenge der Monomeren, eines Cycloolefins der Formel V 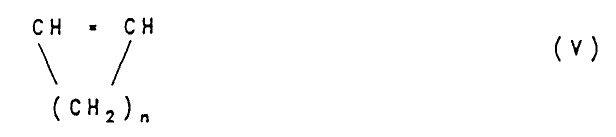 worin n eine Zahl von 2 bis 10 ist, und
0,1 bis 99,9 Gew.-%, bezogen auf die Gesamtmenge der Monomeren, mindestens eines acyclischen 1-Olefins der Formel VI 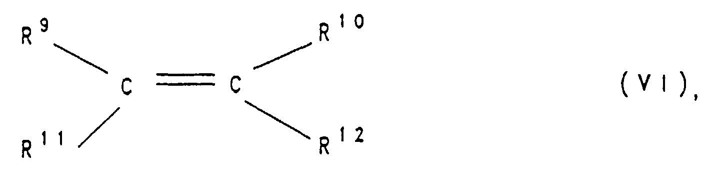 worin R⁹, R¹⁰, R¹¹ und R¹² gleich oder verschieden sind und ein Wasserstoffatom oder einen C₁-C₈-Alkylrest bedeuten, verwendet werden, in Lösung, in Suspension, in dem flüssigen Cycloolefinmonomer oder Cycloolefinmonomerengemisch oder in der Gasphase, bei einer Temperatur von -78 bis 150° C, bei einem Druck von 0,5 bis 64 bar, in Gegenwart eines geträgerten Katalysatorsystems, welches aus mindestens einem Aluminoxan der Formel VII 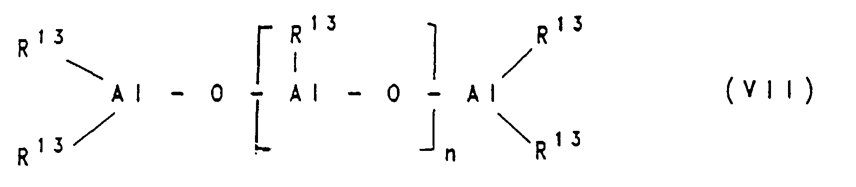 für den linearen Typ und/oder der Formel VIII 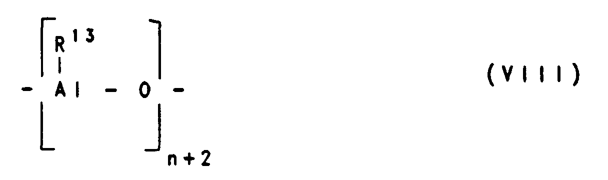 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, polymerisiert werden, und aus mindestens einer Metallocen-Verbindung der Formel IX 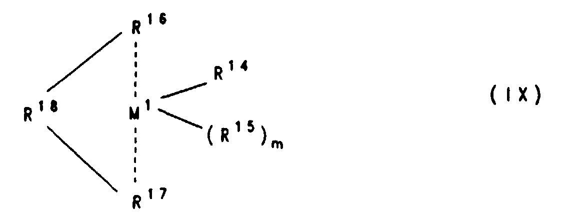 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- m: eins oder zwei, je nach der Wertigkeit des Zenralatoms M¹, sein kann,
- R₁₈: 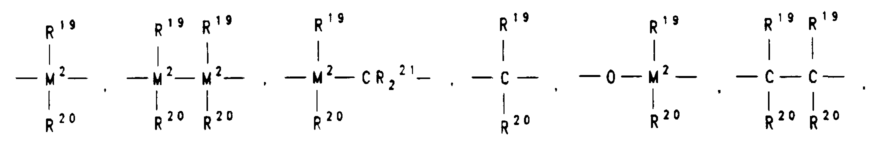 = BR¹⁹, = AlR¹⁹, -Ge-, -Sn-, -O-, -S-, = SO, SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden,
- M²: Silizium, Germanium oder Zinn ist,
- R¹⁶ und R¹⁷: gleich oder verschieden sind und einen ein- oder mehrkernigen Kohlenwasserstoffrest, welcher mit dem Zentralatom M¹ eine Sandwichstruktur bilden kann, bedeuten.

Als Monomere werden mindestens ein polycyclisches Olefin der Formel I, II, III oder IV, vorzugsweise ein Cycloolefin der Formel I oder III, 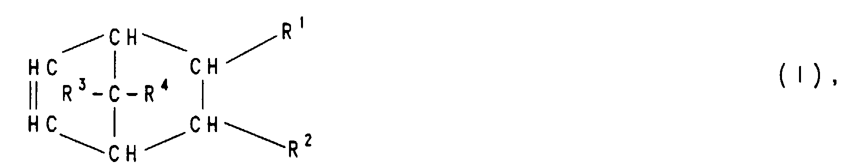 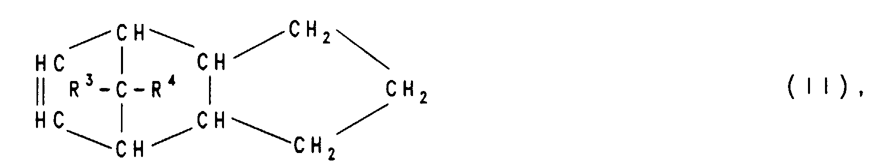 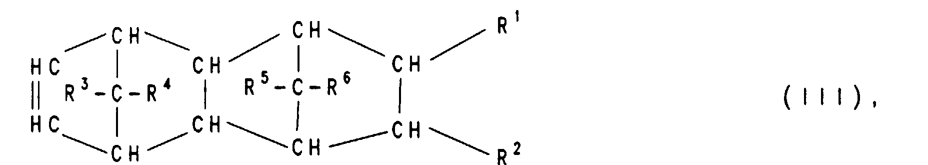 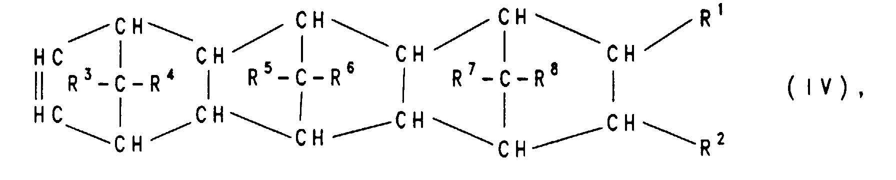 worin R¹, R², R³, R⁴, R⁵, R⁶, R⁷ und R⁸ gleich oder verschieden sind und ein Wasserstoffatom oder einen C₁-C₈-Alkylrest oder einen C₁-C₁₆-Arylrest bedeuten, wobei gleiche Reste in den verschiedenen Formeln eine unterschiedliche Bedeutung haben können, polymerisiert.
Gegebenenfalls wird auch ein monocyclisches Olefin der Formel V 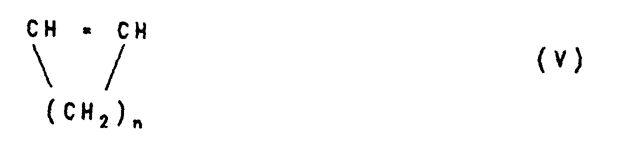 worin n eine Zahl von 2 bis 10 ist, verwendet.
Ein anderes Comonomer ist ein acyclischen 1-Olefins der Formel VI, 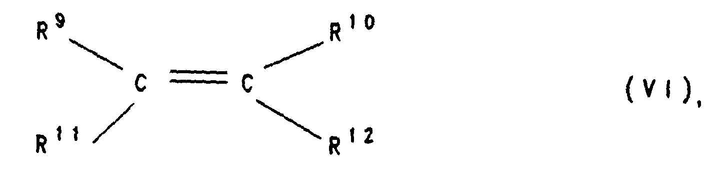 worin R⁹, R¹⁰, R¹¹ und R¹² gleich oder verschieden sind und ein Wasserstoffatom oder einen C₁-C₈-Alkylrest, der auch eine Doppelbindung enthalten kann, oder einen C₆-C₁₆-Arylrest bedeuten. Bevorzugt sind Ethylen, Propylen, Buten, Hexen, Octen oder Styrol. Besonders bevorzugt ist Ethen. Darüber hinaus können auch Diene eingesetzt werden.

Insbesondere werden Copolymere von polycyclischen Olefinen der Formel I und II hergestellt.

Das polycyclische Olefin (I bis IV) wird in einer Menge von 0,1 bis 99,9 Gew.-%, das monocyclische Olefin (V) in einer Menge von 0 bis 99,9 Gew.-% und das acyclische 1-Olefin (VI) in einer Menge von 0,1 bis 99,9 Gew.-%, jeweils bezogen auf die Gesamtmenge der Monomeren, eingesetzt.

Die Monomeren werden vorzugsweise in folgenden Mengenverhältnissen eingesetzt:
a) das molare Monomerverhältnis polycyclisches Olefin (I bis IV) zu 1-Olefin (VI) beträgt in den entsprechenden Polymeren 1:99 bis 99:1, vorzugsweise 20:80 bis 80:20;
b) bei Polymeren aus polycyclischen Olefinen (I bis IV) und monocyclischen Olefinen (V) beträgt das Molverhältnis polycyclisches Olefin zu monocyclischem Olefin 10:90 bis 90:10;
c) bei Polymeren aus polycyclischen Olefinen (I bis IV), monocyclischen Olefinen (V) und 1-Olefinen (VI) beträgt das molare Monomerverhältnis polycyclisches Olefin zu monocyclischem Olefin zu 1-Olefin 93:5:2 bis 5:93:2 bis 5:5:90, d.h. das Molverhältnis liegt innerhalb eines Mischungsdreiecks, dessen Ecken durch die Molverhältnisse 97:1:2, 5:93:2 und 5:1:94 festgelegt sind;
d) in den Angaben a), b) und c) sind als polycyclische Olefine, monocyclische Olefine und 1-Olefine auch Gemische zweier oder mehrerer Olefine des jeweiligen Typs zu verstehen.

Der bei der Polymerisation verwendete Katalysator besteht aus einem Aluminoxan und mindestens einem Metallocen der Formel IX.
In Formel IX ist M¹ ein Metall aus der Gruppe Titan, Zirkon, Hafnium, Vanadium, Niob und Tantal, vorzugsweise Zirkon und Hafnium.
R¹⁴ und R¹⁵ sind gleich oder verschieden und bedeuten ein
   Wasserstoffatom, eine C₁-C₁₀-, vorzugsweise
   C₁-C₃-Alkylgruppe, eine C₁-C₁₀-, vorzugsweise
   C₁-C₃-Alkoxygruppe, eine C₆-C₁₀, vorzugsweise
   C₆-C₈-Arylgruppe, eine 6₆-C₁₀-, vorzugsweise
   C₆-C₈-Aryloxygruppe, eine C₂-C₁₀-, vorzugsweise
   C₂-C₄-Alkenylgruppe, eine C₇-C₄₀, vorzugsweise
   C₇-C₁₀-Arylalkylgruppe, eine C₇-C₄₀-, vorzugsweise
   C₇-C₁₂-Alkylarylgruppe, eine C₈-C₄₀-, vorzugsweise
   C₈-C₁₂-Arylalkenylgruppe oder ein Halogenatom, vorzugsweise
   Chlor,
m eins oder zwei, je nach Wertigkeit des Zentralatoms M¹ sein kann,
R¹⁶ und R¹⁷ sind gleich oder verschieden und bedeuten einen ein- oder mehrkernigen Kohlenwasserstoffrest, welcher mit dem Zentralatom M¹ eine Sandwichstruktur bilden kann.

Bevorzugt ist R¹⁶ und R¹⁷ unabhängig voneinander Indenyl, Fluorenyl, Cyclopentadienyl, wobei diese auch einen oder mehrere Kohlenwasserstoffreste tragen können.
R¹⁸ ist eine ein- oder mehrgliedrige Brücke, welche die Reste R¹⁶ und R¹⁷ verknüpft und bedeutet 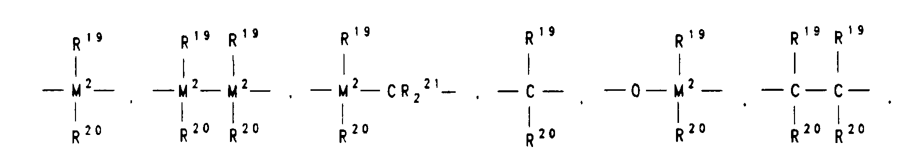 = BR¹⁹, = AlR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, vorzugsweise Chlor, eine C₁-C₁₀- vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀, vorzugsweise C₆-C₈-Arylgruppe, eine C₁-C₁₀, vorzugsweise C₁-C₄-Alkoxygruppe, insbesondere Methoxygruppe, eine C₂-C₁₀, vorzugsweise
C₂-C₄-Alkenylgruppe, eine C₇-C₄₀, vorzugsweise C₇-C₁₀-Arylalkylgruppe, eine C₈-C₄₀, vorzugsweise C₈-C₁₂-Arylalkenylgruppe oder eine C₇-C₄₀, vorzugsweise C₇-C₁₂-Alkylarylgruppe bedeuten, oder R¹⁹ und R²⁰ oder R¹⁹ und R²¹ bilden jeweils zusammen mit den sie verbindenden Atomen einen Ring.

M² ist Silizium, Germanium oder Zinn, bevorzugt Silizium oder Germanium.

R¹⁸ ist vorzugsweise = CR¹⁹R²⁰, = SiR¹⁹R²⁰, = Ger¹⁹R²⁰, -O-, -S-, = SO, = PR¹⁹ oder = P(O)R¹⁹.

Die Metallocene können, wie in z. B. EP-A0-355 682 beschrieben, hergestellt werden.

Bevorzugte Metallocene sind:
Biscyclopentadienylzirkondichlorid
Biscyclopentadienylzirkondimethyl
Biscyclopentadienylzirkondiphenyl
Biscyclopentadienylzirkondibenzyl
Biscyclopentadienylzirkonbistrimethylsilyl
Bis(methylcyclopentadienyl)zirkondichlorid
Bis(1,2-dimethylcyclopentadienyl)zirkondichlorid
Bis(1,3-dimethylcyclopentadienyl)zirkondichlorid
Bis(1,2,4-trimethylcyclopentadienyl)zirkondichlorid
Bis(pentamethylcyclopentadienyl)zirkondichlorid
Bis(ethylcyclopentadienyl)zirkondichlorid
Bis(propylcyclopentadienyl)zirkondichlorid
Bis(butylcyclopentadienyl)zirkondichlorid
Bisfluorenylzirkondichlorid
Bisindenylzirkondichlorid
Diphenylmethylen(9-fluorenyl)(cyclopentadienyl)zirkondichlorid
Diphenylmethylen(9-fluorenyl)(cyclopentadienyl)hafniumdichlorid
Dimethylsilyl-bis-(cyclopentadienyl)-zirkondichlorid
Dimethylsilyl(9-fluorenyl)(cyclopentadienyl)zirkondichlorid
Dimethylsilyl(9-fluorenyl)(cyclopentadienyl)hafniumdichlorid
Isopropyliden(9-fluorenyl)(cyclopentadienyl)zirkondichlorid
Isopropyliden(9-fluorenyl)(cyclopentadienyl)hafniumdichlorid
Dimethylsilyl-bis-(9-fluorenyl)-zirkondichlorid
Dimethylsilyl-bis-1-tetrahydroindenylzirkondichlorid
Dimethylsilyl-bis-1-(2-methyl-tetrahydroindenyl)-zirkondichlorid
Dimethylsilyl-bis-1-(2,3,5-trimethyl-cyclopentadienyl)-zirkondi-chlorid
Dimethylsilyl-bis-1-(2,3-dimethyl-cyclopentadienyl)-zirkondichlo-rid
Dimethylsilyl-bis-1-indenylzirkondichlorid
Dimethylsilyl-bis-1-indenylzirkondimethyl
Dimethylgermyl-bis-1-indenylzirkondichlorid
Dimethylsilyl-bis-1-(2-methyl-indenyl)-zirkondichlorid
Dimethylsilyl-bis-1-(2-methyl-4-isopropylindenyl)-zirkondichlorid
Phenylmethylsilyl-bis-1-(2-methyl-indenyl]-zirkondichlorid
Dimethylsilyl-bis-1-(2-methyl-4-ethylindenyl)-zirkondichlorid
Ethylen-bis-1-(4,7-dimethyl-indenyl)-zirkondichlorid
Phenyl(methyl]silyl-bis-1-indenylzirkondichlorid
Phenyl(vinyl)silyl-bis-1-indenylzirkondichlorid
Diphenylsilyl-bis-1-indenylzirkondichlorid
Dimethylsilyl-bis-1-(2-methyl-4-tertiärbutylindenyl)-zirkondichlorid
Methylphenylsilyl-bis-1-(2-methyl-4-isopropylindenyl)-zirkondichlorid
Dimethylsilyl-bis-1-(2-ethyl-4-methylindenyl)-zirkondichlorid
Dimethylsilyl-bis-1-(2,4-dimethylindenyl)-zirkondichlorid
Dimethylsilyl-bis-1-(2-methyl-4-ethylindenyl)-zirkondimethyl
Dimethylsilyl-bis-1-(2-methyl-4,6-diisopropylindenyl)-zirkondichlorid
Dimethylsilyl-bis-1-(2,4,6-trimethylindenyl)-zirkondichlorid
Methylphenylsilyl-bis-1-(2methyl-4,6-diisopropylindenyl)-zirkondichlorid
1,2-Ethandiyl-bis-1-(2methyl-4,6-diisopropylindenyl)-zirkondichlorid
Dimethylsilyl-bis-1-(2-methyl-4,5-benzoindenyl)-zirkondichlorid
Dimethylsilyl-bis-1-(2-methyl-4-phenylindenyl)-zirkondichlorid
Ethylen-bis-(1-indenyl)-zirkondichlorid
Ethylen-bis-1-(4,5,6,7-tetrahydroindenyl)-zirkondichlorid
Ethylen-bis-(1-indenyl)-hafniumdichlorid
Dimethylsilyl-bis-1-(4,5-benzoindenyl)-zirkondichlorid
Isopropyl-(cyclopentadienyl)(1-indenyl)-zirkondichlorid
Isopropyl-(3-methylcyclopentadienyl)(1-indenyl)-zirkondichlorid
Dimethylsilyl-(cyclopentadienyl)(1-indenyl)-zirkondichlorid
Dimethylsilyl-bis-(3-methylcyclopentadienyl)-zirkondichlorid
Dimethylsilyl-bis-(2,4-dimethylcyclopentadienyl)-zirkondichlorid
Methylethylen-bis-(1-indenyl)-zirkondichlorid
Methylphenylcarbyl(9-fluorenyl)(cyclopentadienyl)zirkondichlorid
Diphenylsilyl(9-fluorenyl)(cyclopentadienyl)zirkondichlorid
Dimethylsilyl(9-(2,7-ditertbutylfluorenyl))(cyclopentadienyl)-zirkondichlorid
Diphenylcarbyl(9-(2,7-ditertbutylfluorenyl))(cyclopentadienyl)zirkondichlorid
Isopropyl(9-(2,7-ditertbutylfluorenyl))(cyclopentadienyl)zirkondichlorid
Isopropyl(9-fluorenyl)(1-(3-methylcyclopentadienyl))zirkondichlorid
Isopropyl(9-fluorenyl)(1-(3-isopropylcyclopentadienyl))zirkondichlorid
Dimethylsilyl(9-fluorenyl)(1-(3-methylcyclopentadienyl))zirkondichlorid
Dimethylsilyl(9-fluorenyl)(1-(3-isopropylcyclopentadienyl))zirkondichlorid
Isopropyl(9-fluorenyl)(1-indenyl)zirkondichlorid
Dimethylsilyl(9-fluorenyl)(1-indenyl)zirkondichlorid

Chirale Metallocene werden bei der Herstellung des erfindungsgemäßen Katalysatorsystems bevorzugt als Racemat eingesetzt. Verwendet werden kann aber auch die reine R- oder S-Form. Im Falle der Herstellung hochtaktischer Polyolefine sollte davon die meso-Form der Metallocene vor Verwendung abgetrennt werden. Als Zentralatom der Metallocene werden Zirkon und Hafnium bevorzugt, besonders bevorzugt wird Zirkon.

Besonders bevorzugte Metallocene sind:
Biscyclopentadienylzirkondichlorid
Bisindenylzirkondichlorid
Diphenylmethylen(9-fluorenyl)(cyclopentadienyl)zirkondichlorid
Dimethylsilyl-bis-(cyclopentadienyl)-zirkondichlorid
Dimethylsilyl(9-fluorenyl)(cyclopentadienyl)zirkondichlorid
Isopropyliden(9-fluorenyl)(cyclopentadienyl)zirkondichlorid
Dimethylsilyl-bis-1-indenylzirkondichlorid
Diphenylsilyl-bis-1-indenylzirkondichlorid
Ethylen-bis-(1-indenyl)-zirkondichlorid
Isopropyl-(cyclopentadienyl)(1-indenyl)-zirkondichlorid
Isopropyl-(3-methylcyclopentadienyl)(1-indenyl)-zirkondichlorid
Dimethylsilyl-(cyclopentadienyl)(1-indenyl)-zirkondichlorid
Methylphenylcarbyl(9-fluorenyl)(cyclopentadienyl)zirkondichlorid
Isopropyl(9-fluorenyl)(1-(3-methylcyclopentadienyl))zirkondichlorid
Isopropyl(9-fluorenyl)(1-(3-isopropylcyclopentadienyl))-zirkondichlorid

Der Cokatalysator ist ein Aluminoxan der Formel VII 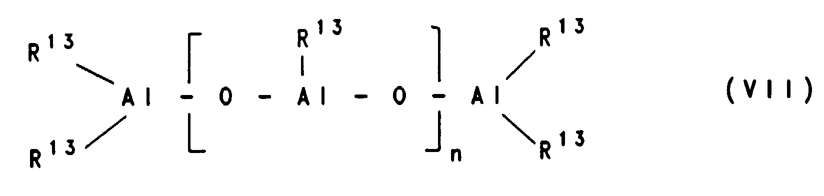 für den linearen Typ und/oder der Formel VIII 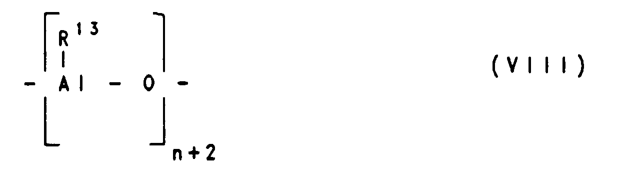 für den cyclischen Typ. In diesen Formeln bedeutet R¹³ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan das vorzugsweise in geträgerter Form zum Einsatz kommt, kann auf verschiedene Art und Weise hergestellt werden, wie z. B. in der EP-A0-355 682 beschrieben.

Zur Dekontaminierung der Monomeren und des Lösungsmittels können preisgünstige Aluminiumalkyle wie z. B. Triisobutylaluminium verwendet werden. Hierzu werden Aluminiumalkylkonzentrationen im Reaktionsraum von 0,0001 bis 20 g/l, bevorzugt 0,001 bis 5 g/l und besonders bevorzugt 0,01 bis 2 g/l verwendet.

Die Polymerisation wird in einem für das Ziegler-Niederdruckverfahren gebräuchlichen inerten Lösemittel bzw. Suspensionsmittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan, Dekalin, genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol und Xylol.

Schließlich kann auch das zu polymerisierende Monomere als Lösemittel oder Suspensionsmittel eingesetzt werden. Im Falle von reinem Norbornen wird die Polymerisation z. B. bei einer Temperatur oberhalb 45°C durchgeführt. Die Molmasse des Polymerisats kann in bekannter Weise geregelt werden; vorzugsweise wird dazu Wasserstoff verwendet.

Die Polymersiation wird bevorzugsterweise in Lösung, kontinuierlich oder diskontinuierlich, ein- oder mehrstufig bei einer Temperatur von -78 bis 150°C, vorzugsweise -20 bis 120°C, durchgeführt. Der Druck beträgt 0,5 bis 64 bar und wird entweder durch die gasförmigen Olefine oder mit Hilfe von Inertgas erhalten.

Besonders vorteilhaft sind kontinuierliche sowie mehrstufige Verfahren, weil sie einen rationalen Einsatz des polycyclischen Verfahren das polycyclische Olefin, welches als Restmonomer zusammen mit dem Reaktionsgemisch zuführen.

Bei der Herstellung von Copolymerisaten kann die Variation der Molverhältnisse des polycyclischen Olefins zum eingesetzten 1-Olefin in einem weiten Bereich erfolgen. Durch die Wahl der Polymerisationstemperatur, durch die Konzentration der Katalysatorkomponenten und das eingesetzte Molverhältnis läßt sich die Einbaurate an Comomomer nahezu beliebig steuern.

Das erfindungsgemäße Verfahren bietet den Vorteil, daß erhebliche Mengen an teuren Katalysatoren und Cokatalysatoren eingespart werden können.

### Beispiele

Für die Versuche mit der geträgerten Aluminiumverbindung (Methylaluminoxan auf Kieselgel), im folgenden "MAO auf SiO₂, Typ A" genannt, wurde eine ca. 10 Gew.-% Suspension in n-Decan hergestellt, welche gemäß Aluminium-Bestimmung 60 mg Al/ml enthielt.

Außerdem wurde ein lösungsmittelfreies geträgertes Methylaluminoxan auf Kieselgel, im folgenden "MAO auf SiO₂, Typ B" genannt hergestellt, das 20 % (Gew.) Aluminium im Feststoff enthielt.

Es bedeuten:
- VZ =: Viskositätszahl in cm³/g
- M_{W} =: Molmassengewichtsmittel in g/mol (ermittel durch Gelpermeationschromatographie)
- M_{w}/Mₙ =: Molmassendispersität
- Schmp. =: Schmelzpunkt in °C (ermittelt mit DSC, 20°C/min Aufheiz/Abkühlgeschwindigkeit)
- II =: Isotaktischer Index (II = mm + 1/2 mr, ermittelt durch ¹³C-NMR-Spektroskopie)
- MFI/(230/5) =: Schmelzindex, gemessen nach DIN 53735; in dg/min
- SD =: Polymerschüttdichte in g/dm³.

### Beispiel 1

3,9 g "MAO auf SiO₂, Typ B" das eine mittlere Partikelgröße von ca. 80 um aufweist, wurden in einem mechanisch rührbaren Gefäß in 60 ml Toluol suspendiert und auf -30°C abgekühlt.
Gleichzeitig werden 65 mg (0,15 mmol) Isopropyl-(9-fluorenyl)-cyclopentadienylzirkondichlorid in 40 ml Toluol gelöst und zur Suspension zugetropft. Das kalte Reaktionsgemisch wird in eine Mikrowellenapparatur eingebracht. Unter Rühren im Inertgasstrom bei einer Mikrowellenfrequenz von 2,45 GHz und einer Mikrowellenleistung von 500 W wird innerhalb von 15 Minuten auf 80°C erwärmt, wobei die Suspension eine rote Farbe annimmt. Die Strahlungsleistung wird so geregelt, daß die Suspension für eine Stunde bei dieser Temperatur gehalten wird (250 W, getaktet). Anschließend wird filtriert und der rote Farbstoff dreimal mit 50 ml Toluol gewaschen. Die Analyse des hellroten Filtrats ergibt einen Zirkongehallt von 0,9 mg (entspricht 4,3 mg Isopropyl-(9-fluorenyl)-cyclopentadienylzirkondichlorid). Der Feststoff wird im Vakuum getrocknet. Man erhält 3 g freifließenden, violetten, geträgerten Katalysator mit einem Gehalt von 20 mg Zirkonocen pro Gramm Katalysator.

### Beispiel 2 (Vergleichsbeispiel)

20 ml der Suspension des "MAO auf SiO₂ Typ A" (45 mmol Al) wurde unter Argon in eine G3-Schlenkfritte eingefüllt und mit einer Lösung von 4,2 mg Isopropyl-(9-fluorenyl)-cyclopentadienylzirkondichlorid in 10 ml Toluol (9,7 µmol Zr) versetzt. Das Reaktionsgemisch wurde 30 Minuten bei Raumtemperatur gerührt, wobei eine spontane Farbänderung nach violett allmählich verblaßte. Anschließend wurde abfiltriert und der Feststoff 3 mal mit 10 ml Hexan gewaschen. Der geträgerte Katalysator wurde als hexanfeuchter Filterrückstand 2 erhalten.

### Beispiel 3

Ein sauberer und trockener 1,5 l Polymerisationsreaktor mit Rührer wurde erst mit Stickstoff und dann mit Ethylen gespült. Der Reaktor wurde mit 600 ml einer toluolischen Norbornenlösung (411 g Norbornen und 86 ml Toluol) gefüllt. Die Lösung wurde mit 2 ml einer 20 Gew %-igen toluolischen Lösung von Tri(n-butyl)aluminium versetzt. Anschließend wurde die Temperatur im Reaktor auf 70°C und der Ethylendruck auf 6 bar eingestellt.
In einem 25 ml-Schlenkgefäß wurden 210 mg des Katalysatorpulvers hergestellt nach Beispiel 1 in 10 ml trockenem Hexan suspendiert. Diese Suspension wurde ber eine Schleuse in den Reaktor gegeben und der Ethylendruck wurde durch Nachdosieren von Ethylen bei 6 bar 60 Minuten konstant gehalten. Die Ethylenaufnahme wurde mittels eines Massenflußmessers der Firma Brooks kontinuierlich verfolgt. Die Ethylenaufnahme betrug über die Dauer der Polymerisation nahezu konstant 9 l/h (Normliter/Stunde).
Die Polymerisation wurde nach 60 Minuten durch Zugabe von 100 ml eines wasserfeuchten (gesättigt bei Raumtemperatur) Toluols gestoppt. Der Reaktorinhalt wurde dann über eine auf 70°C beheizte 3I-Nutsche mit einer eingelegten Filterschicht T5500 der Firma Seitz, bei einem Überdruck in der Nutsche von 2,5 bar innerhalb von 4 Minuten filtriert. Es wurde eine klare Lösung erhalten. Anschließend wurde die Lösung in 5 l Aceton gefällt und mit 3 l Aceton gewaschen. Das ausgefällte Pulver wurde bei 100°C und 0,2 bar 15 Stunden getrocknet.
Es wurden insgesamt 51,4 g Norbornen-Ethylen-Copolymer erhalten. Die Glastemperatur betrug 154°C und die Viskositätszahl (Lösungsviskosität) war 180ml/g.

### Beispiel 4 (Vergleichsbeispiel)

Es wurde analog zu Beispiel 3 verfahren wobei abweichend davon der gesamte hexanfeuchte Filterrückstand, der bei einer Katalysatorpreparation gemäß Beispiel 2 anfällt, in 10 ml trockenem Hexan resuspendiert wurden dann in die Polymerisation eingesetzt wurden. Die Ethylenaufnahme betrug zu Beginn der Polymerisation 9,3 l/h, fiel jedoch während 60 Minuten merklich ab auf 6,7 l/h. Die Filtration durchgeführt unter den gleichen Bedingungen wie in Beispiel 9 dauerte 18 Minuten an.
Es wurden 44,6 g Produkt erhalten. Die Glastemperatur betrug 152°C und die Viskositätszahl war 169 ml/g.

### Beispiel 5

Die in diesem Versuch verwendete Anlage besteht aus:
- einem 1,5 I-Reaktor mit Rührer, Schleuse und einem Steigrohr, an dessen Ende eine zylindrische Filterkerze aufgeschraubt ist, die aus einem Stützrohr und einem mehrschichtigen Metallfilter besteht, dessen Porosität von 5 um von einem Metallvlies, das zwischen Metallgeweben eingebettet ist, bestimmt wird;
- einem 15 l-Vorlagegefäß, das über eine Membranpumpe mit dem Reaktor verbunden ist;
- einem 0.1 I-Druckgefäß, das als Katalysatorvorlage dient und mit dem Reaktor über eine 1 ml-Schleuse verbunden ist;
   einem 2 I-Entspannungsgefäß, das über zwei Ventile, welche beide getaktet betrieben werden konnten, mit dem Steigrohr und dem Bodenventil des Reaktors verbunden ist.

In die 15-I Vorlage wurde eine Lösung gefüllt, die 1250 g Norbornen, 270 ml Toluol und 3,5 g Tri(-butyl)aluminium enthielt.
Das 0,1 I-Druckgefäß wurde mit einer Katalysatorsuspension gefüllt die aus 1 g eines gemäß Beispiel 1 hergestellten geträgerten Katalysators und 48 ml Hexan bestand.
Der saubere und trockene Reaktor wurde dann auf 70°C gebracht und aus der Vorlage mit 600 ml Norbornenlösung gefüllt. Es wurde anschließend ein Ethylendruck von 6 bar aufgedrückt und nach Sättigung wurden 10 ml der Katalysatorsuspesion aus dem Druckgefäß zugegeben. Der Ethylendruck wurde im weiteren Verlauf des Versuchs durch Nachdosieren bei 6 bar konstant gehalten. Auch die Temperatur wurde konstant auf 70°C eingestellt. Nach 60 Minuten wurde über das getaktete Ventil ein Fluß von 0,6 l/h über das Steigrohr kontinuierlich ausgetragen. Gleichzeitig wurde begonnen über die Membranpumpe den gleichen Fluß aus der Norbornenvorlage dem Reaktor zuzuführen. Die Ethylenaufnahme wurde mittels eines Masseflußmessers der Firma Brooks kontinuierlich verfolgt. Während sie innerhalb der ersten 60 Minuten von 8,7 l/h (Normliter/Stunde) auf 8,2 l/h abfiel, wurde während der nächsten 60 Minuten ein weiterer Abstieg auf 7,8 l/h registriert.
Die ausgetragene Lösung wurde analog Beispiel 3 gefällt und anschließend wurde das Polymerprodukt getrocknet.
Es wurden in den 120 Minuten insgesamt 88,5 g Norbornen-Ethylen-Copolymer erhalten. Die Glastemperatur betrug 156°C und die Viskositätszahl war 176 ml/g.

### Beispiel 6 (Vergleichsbeispiel)

Der Versuch wurde analog zu Beispiel 5 durchgeführt, wobei folgende Abweichungen von Beispiel 5 gelten:
- anstatt über das Steigrohr wurde nach 60 Minuten die Reaktionslösung über das Bodenventil ausgetragen ;
- die Ethylenaufnahme war am Anfang 9,1 l/h, nach 60 Minuten 8,7 l/h und nach weiteren 60 Minuten 4,7l/h.
Es wurden in den 120 Minuten insgesamt 72,2 g Polymer erhalten. Die Glastemperatur betrug 154°C und die Viskositätszahl war 165 ml/g.

### Beispiel 7

1g des getrockneten Katalysators aus Beispiel 1 wird in 50ml Hexan für die Polymerisation suspendiert.
Parallel dazu wurde ein trockener 16-dm³-Reaktor zunächst mit Stickstoff und anschließend mit Propylen gespült und mit 10 dm³ flüssigem Propylen befüllt. Dann wurden 3 cm³ Triisobutylaluminium (pur, 12 mmol) mit 30 ml Hexan verdünnt, in den Reaktor gegeben und der Ansatz bei 30°C 15 Minuten gerührt. Anschließend wurde die vorbereitete Katalysator-Suspension in den Reaktor gegeben, durch Wärmezufuhr auf die Polymerisationstemperatur von 70°C aufgeheizt (4°C/min) und das Polymerisationssystem 1 h durch Kühlung bei 70°C gehalten. Gestoppt wurde die Polymerisation durch Zusatz von 20 ml Isopropanol. Das überschüssige Monomer wurde abgegast, das Polymer im Vakuum getrocknet.
Es resultierten 600 g grobkörniges Polypropylen-Pulver. Der Reaktor zeigte keine Beläge an Innenwand oder Rührer. Die Katalysatoraktivität betrug somit 30 kg PP/g Metallocen x h.

### Beispiel 8

1 g des getrockneten Katalysators aus Beispiel 1 wird in 100 ml absolutiertem und mit Inertgas gesättigtem Toluol suspendiert. Unter Schutzgas wird die Suspension für drei Stunden auf 80°C erhitzt. Nach dem Abkühlen auf Raumtemperatur wird durch eine G3-Fritte filtriert. Das Filtrat ist farblos. Der violette Filterrückstand wird mit Hexan gewaschen und anschließend in 50ml Hexan für die Polymerisation suspendiert. Die Polymerisation erfolgt analog zu Beispiel 7. Es resultierten 530 g grobkörniges Polypropylen-Pulver. Der Reaktor zeigte keine Beläge an Innenwand oder Rührer. Die Katalysatoraktivität betrug somit 26,5 kg PP/g Metallocen x h.

### Beispiel 9 (Vergleichsbeispiel)

Der hexanfeuchte Filterrückstand des Katalysatorsystems hergestellt gemäß Beispiel 2 wird in 50 ml Hexan für die Polymerisation suspendiert. Die Polymerisation erfolgt analog zu Beispiel 7. Es resultierten 250 g feinkörniges Polypropylen-Pulver. Der Reaktor zeigte Beläge an Innenwand und Rührer. Die Katalysatoraktivität betrug somit 60 kg PP/g Metallocen x h.

### Beispiel 10 (Vergleichsbeispiel)

Der hexanfeuchte Filterrückstand des Katalysatorsystems hergestellt gemäß Beispiel 2 wird in 100 ml absolutiertem und mit Inertgas gesättigtem Toluol suspendiert. Unter Schutzgas wird die Suspension für drei Stunden auf 80°C erhitzt. Nach dem Abkühlen auf Raumtemperatur wird durch eine G3-Fritte filtriert. Das Filtrat ist rot gefärbt. Der Filterrückstand wird mit Hexan gewaschen und anschließend in 50 ml Hexan für die Polymerisation suspendiert. Die Polymerisation erfolgt analog zu Beispiel 7. Es resultierte kein Polypropylen-Pulver.

## Patentansprüche

1. Verfahren zur Herstellung von Cycloolefinpolymeren aus cyclischen und acyclischen Olefin-Monomeren unter Verwendung eines Katalysatorsystems in einem Reaktionsraum, dadurch gekennzeichnet, daß die Verweilzeit der Monomeren im Reaktionsraum von der Verweilzeit des Katalysatorsystems im Reaktionsraum getrennt ist, indem die Trennung der Verweilzeiten der Monomeren und des Katalysatorsystems durch Fixierung des Katalysatorsystems auf einem Träger und durch Einbau einer porösen Trennwand in den Reaktionsraum erreicht wird.

2. Verfahren nach Anspruch 1, dadurch gekennzeichnet, daß die Fixierung des Katalysators und/oder des Cokatalysators auf den Träger unter der Einwirkung von Mikrowellen erfolgt.

3. Verfahren nach Anspruch 1, dadurch gekennzeichnet, daß die mittlere Porosität der Trennwand zwischen 0,1 und 50 µm, bevorzugt zwischen 0,25 und 20 µm und besonders bevorzugt zwischen 2 und 10 µm liegt.

4. Verfahren nach Anspruch 1, dadurch gekennzeichnet, daß als Trägermaterial Silikagele, Aluminiumoxide, festes Aluminoxan oder andere anorganische Trägermaterialien, wie z. B. Magnesiumchlorid oder ein teilkristallines, unter Polymerisationsbedingungen unlösliches Polyolefinpulver in feinverteilter Form verwendet werden.

5. Verfahren nach Anspruch 1, dadurch gekennzeichnet, daß das Katalysatorsystem aus mindestens einem Metallocen-Katalysator und mindestens einem Cokatalysator besteht.

6. Verfahren nach mindestens einem der Ansprüche 1, dadurch gekennzeichnet, daß als Monomere 0,1 bis 99,9 Gew.-%, bezogen auf die Gesamtmenge der Monomeren, mindestens eines Monomers der Formeln I, II III oder IV 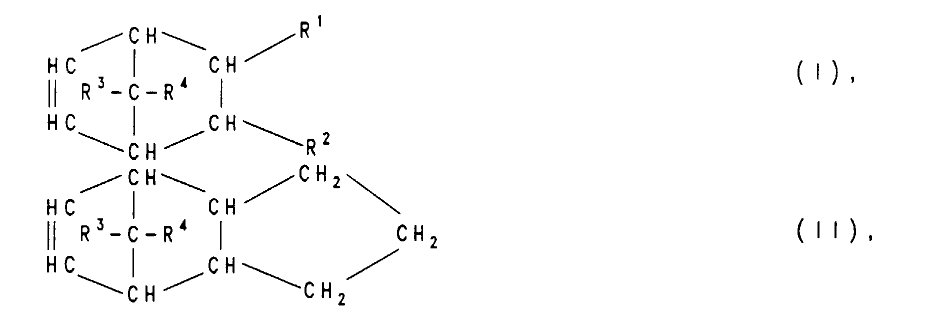 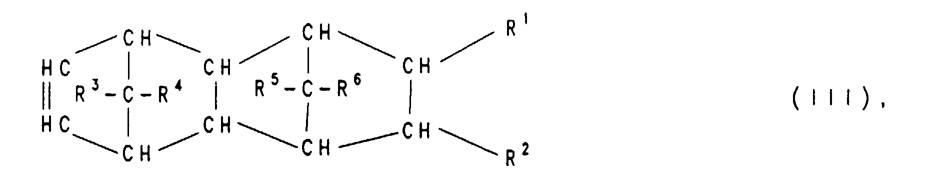 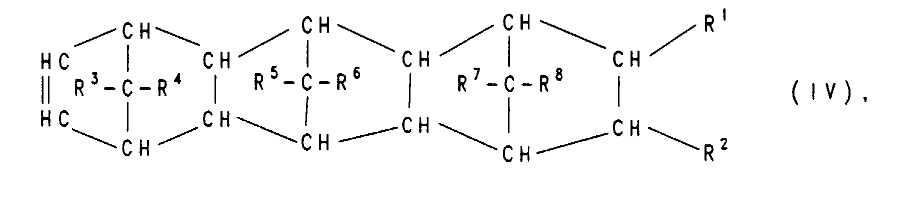 worin R¹, R², R³, R⁴, R⁵, R⁶, R⁷ und R⁸ gleich oder verschieden sind und ein Wasserstoffatom oder einen C₁-C₈-Alkylrest oder Arylrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel V 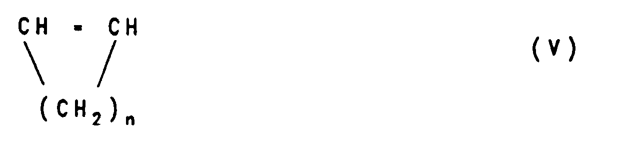 worin n eine Zahl von 2 bis 10 ist, und
0,1 bis 99,9 Gew.-%, bezogen auf die Gesamtmenge der Monomeren, mindestens eines acyclischen 1-Olefins der Formel VI 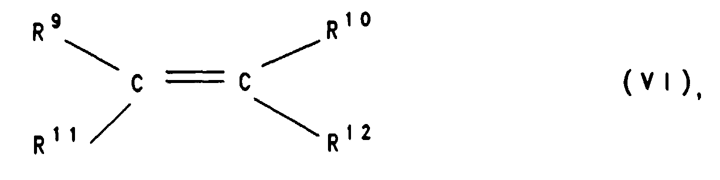 worin R⁹, R¹⁰, R¹¹ und R¹² gleich oder verschieden sind und ein Wasserstoffatom oder einen C₁-C₈-Alkylrest bedeuten, verwendet werden, in Lösung, in Suspension, in dem flüssigen Cycloolefinmonomer oder Cycloolefinmonomergemisch oder in der Gasphase, bei einer Temperatur von -78 bis 150° C, bei einem Druck von 0,5 bis 64 bar, in Gegenwart eines geträgerten Katalysatorsystems, welches aus mindestens einem Aluminoxan der Formel VII 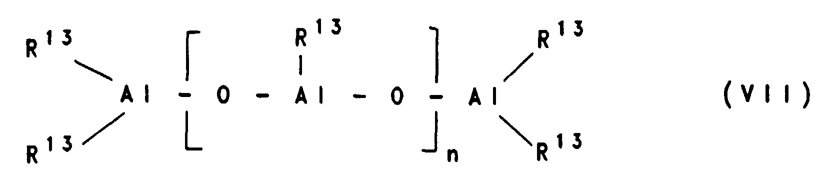 für den linearen Typ und/oder der Formel VIII 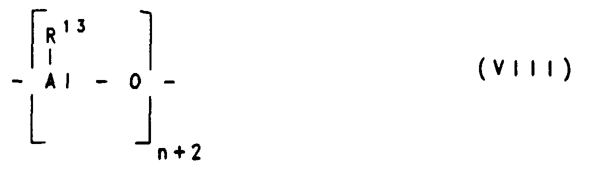 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, und aus mindestens einer Metallocen-Verbindung der Formel IX 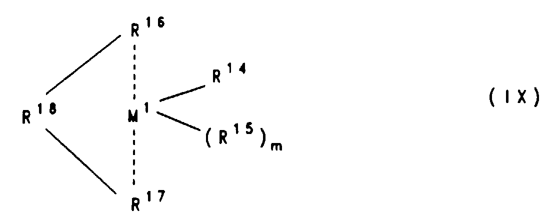 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten, und
m eins oder zwei, je nach der Wertigkeit des Zentralatoms M¹, sein kann,
R₁₈ 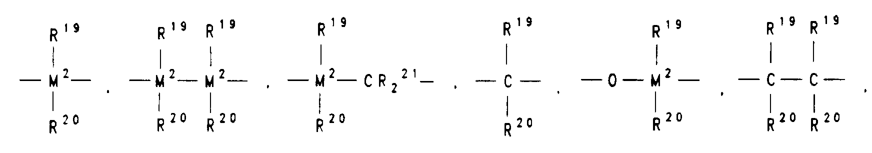 = BR¹⁹, = Al¹⁹, -Ge-, -Sn-, -O-, -S-, = SO, =SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden,
M² Silizium, Germanium oder Zinn ist,
R¹⁶ und R¹⁷ gleich oder verschieden sind und einen ein- oder mehrkernigen Kohlenwasserstoffrest, welcher mit dem Zentralatom M¹ eine Sandwichstruktur bilden kann, bedeuten.

7. Verfahren nach Anspruch 6, dadurch gekennzeichnet, daß der Metallocen-Katalysator einem Metallocen der Formel IX entspricht, worin
M¹ ein Metall aus der Gruppe Titan, Zirkon, Hafnium, Vanadium, Niob und Tantal, vorzugsweise Zirkon und Hafnium,
R¹⁴ und R¹⁵ sind gleich oder verschieden sind und ein
Wasserstoffatom, eine C₁-C₁₀-, vorzugsweise
C₁-C₃-Alkylgruppe, eine C₁-C₁₀-, vorzugsweise
C₁-C₃-Alkoxygruppe, eine C₆-C₁₀, vorzugsweise
C₆-C₈-Arylgruppe, eine C₆-C₁₀-, vorzugsweise
C₆-C₈-Aryloxygruppe, eine C₂-C₁₀-, vorzugsweise
C₂-C₄-Alkenylgruppe, eine C₇-C₄₀, vorzugsweise
C₇-C₁₀-Arylalkylgruppe, eine C₇-C₄₀-, vorzugsweise
C₇-C₁₂-Alkylarylgruppe, eine C₈-C₄₀-, vorzugsweise
C₈-C₁₂-Arylalkenylgruppe oder ein Halogenatom, vorzugsweise
Chlor bedeuten,
m eins oder zwei, je nach Wertigkeit des Zentralatoms M¹ sein kann,
R¹⁶ und R¹⁷ sind gleich oder verschieden und bedeuten einen ein- oder mehrkernigen Kohlenwasserstoffrest, welcher mit dem Zentralatom M¹ eine Sandwichstruktur bilden kann,
R¹⁸ ist eine ein- oder mehrgliedrige Brücke, welche die Reste R¹⁶ und R¹⁷ verknüpft und bedeutet 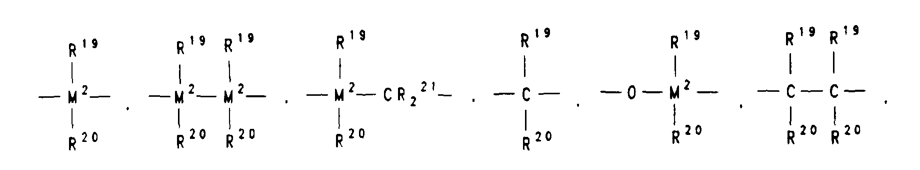 = BR¹⁹, AlR¹⁹, -Ge-, -Sn-,-O-, -S-, = SO, = SO₂, = NR¹⁹, = CO, = PR¹⁹ oder = P(O2)R¹⁹ ist, wobei R¹⁹, R²⁰ und R²¹ gleich oder verschieden sind und ein Wasserstoffatom, ein Halogenatom, vorzugsweise Chlor, eine C₁-C₁₀- vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀, vorzugsweise C₆-C₈-Arylgruppe, eine C₁-C₁₀, vorzugsweise C₁-C₄-Alkoxygruppe, insbesondere Methoxygruppe, eine C₂-C₁₀, vorzugsweise
C₂-C₄-Alkenylgruppe, eine C₇-C₄₀, vorzugsweise C₇-C₁₀-Arylalkylgruppe, eine C₈-C₄₀, vorzugsweise C₈-C₁₂-Arylalkenylgruppe oder eine C₇-C₄₀, vorzugsweise C₇-C₁₂-Alkylarylgruppe bedeuten, oder R¹⁹ und R²⁰ oder R¹⁹ und R²¹ bilden jeweils zusammen mit den sie verbindenden Atomen einen Ring,
M² ist Silizium, Germanium oder Zinn, bevorzugt Silizium oder Germanium,
M¹⁸ ist vorzugsweise = CR¹⁹R²⁰, = SiR¹⁹R²⁰, = Ger¹⁹R²⁰, -O-, -S-, = SO, =PR¹⁹ oder =P(O)R¹⁹.

8. Verfahren nach mindestens einem der Ansprüche 6 und 7, dadurch gekennzeichnet, daß als Metallocene
Biscyclopentadienylzirkondichlorid
Biscyclopentadienylzirkondimethyl
Biscyclopentadienylzirkondiphenyl
Biscyclopentadienylzirkondibenzyl
Biscyclopentadienylzirkonbistrimethylsilyl
Bis(methylcyclopentadienyl)zirkondichlorid
Bis(1,2-dimethylcyclopentadienyl)zirkondichlorid
Bis(1,3-dimethylcyclopentadienyl)zirkondichlorid
Bis(1 ,2,4-trimethylcyclopentadienyl)zirkondichlorid
Bis(pentamethylcyclopentadienyl)zirkondichlorid
Bis(ethylcyclopentadienyl)zirkondichlorid
Bis(propylcyclopentadienyl)zirkondichlorid
Bis(butylcyclopentadienyl)zirkondichlorid
Bisfluorenylzirkondichlorid
Bisindenylzirkondichlorid
Diphenylmethylen(9-fluorenyl)(cyclopentadienyl)zirkondichlorid
Diphenylmethylen(9-fluorenyl)(cyclopentadienyl)hafniumdichlorid
Dimethylsilyl-bis-(cyclopentadienyl)-zirkondichlorid
Dimethylsilyl(9-fluorenyl)(cyclopentadienyl)zirkondichlorid
Dimethylsilyl(9-fluorenyl)(cyclopentadienyl)hafniumdichlorid
Isopropyliden(9-fluorenyl)(cyclopentadienyl)zirkondichlorid
Isopropyliden(9-fluorenyl)(cyclopentadienyl)hafniumdichlorid
Dimethylsilyl-bis-(9-fluorenyl)-zirkondichlorid
Dimethylsilyl-bis-1-tetrahydroindenylzirkondichlorid
Dimethylsilyl-bis-1-(2-methyl-tetrahydroindenyl)-zirkondichlorid
Dimethylsilyl-bis-1-(2,3,5-trimethyl-cyclopentadienyl)-zirkondi-chlorid
Dimethylsilyl-bis-1-(2,3-dimethyl-cyclopentadienyl)-zirkondichlo-rid
Dimethylsilyl-bis-1-indenylzirkondichlorid
Dimethylsilyl-bis-1-indenylzirkondimethyl
Dimethylgermyl-bis-1-indenylzirkondichlorid
Dimethylsilyl-bis-1-(2-methyl-indenyl)-zirkondichlorid
Dimethylsilyl-bis-1-(2-methyl-4-isopropylindenyl)-zirkondichlorid
Phenylmethylsilyl-bis-1-(2-methyl-indenyl)-zirkondichlorid
Dimethylsilyl-bis-1-(2-methyl-4-ethylindenyl)-zirkondichlorid
Ethylen-bis-1-(4,7-dimethyl-indenyl)-zirkondichlorid
Phenyl(methyl)silyl-bis-1-indenylzirkondichlorid
Phenyl(vinyl)silyl-bis-1-indenylzirkondichlorid
Diphenylsilyl-bis-1-indenylzirkondichlorid
Dimethylsilyl-bis-1-(2-methyl-4-tertiärbutylindenyl)-zirkondichlorid
Methylphenylsilyl-bis-1-(2-methyl-4-isopropylindenyl)-zirkondichlorid
Dimethylsilyl-bis-1-(2-ethyl-4-methylindenyl)-zirkondichlorid
Dimethylsilyl-bis-1-(2,4-dimethylindenyl)-zirkondichlorid
Dimethylsilyl-bis-1-(2-methyl-4-ethylindenyl)-zirkondimethyl
Dimethylsilyl-bis-1-(2-methyl-4,6-diisopropylindenyl)-zirkondichlorid
Dimethylsilyl-bis-1-(2,4,6-trimethylindenyl)-zirkondichlorid
Methylphenylsilyl-bis-1-(2-methyl-4,6-diisopropylindenyl)-zirkondichlorid
1,2-Ethandiyl-bis-1-(2-methyl-4,6-diisopropylindenyl)-zirkondichlorid
Dimethylsilyl-bis-1-(2methyl-4,5-benzoindenyl)-zirkondichlorid
Dimethylsilyl-bis-1-(2-methyl-4-phenylindenyl)-zirkondichlorid
Ethylen-bis-(1-indenyl)-zirkondichlorid
Ethylen-bis-1-(4,5,6,7-tetrahydroindenyl)-zirkondichlorid
Ethylen-bis-(1-indenyl)-hafniumdichlorid
Dimethylsilyl-bis-1-(4,5-benzoindenyl)-zirkondichlorid
Isopropyl-(cyclopentadienyl)(1-indenyl)-zirkondichlorid
Isopropyl-(3-methylcyclopentadienyl)(1-indenyl)-zirkondichlorid
Dimethylsilyl-(cyclopentadienyl)(1-indenyl)-zirkondichlorid
Dimethylsilyl-bis-(3-methylcyclopentadienyl)-zirkondichlorid
Dimethylsilyl-bis-(2,4-dimethylcyclopentadienyl)-zirkondichlorid
Methylethylen-bis-(1-indenyl)-zirkondichlorid
Methylphenylcarbyl(9-fluorenyl)(cyclopentadienyl)zirkondichlorid
Diphenylsilyl(9-fluorenyl)(cyclopentadienyl)zirkondichlorid
Dimethylsilyl(9-(2,7-ditertbutylfluorenyl))(cyclopentadienyl)-zirkondichlorid
Diphenylcarbyl(9-(2,7-ditertbutylfluorenyl))(cyclopentadienyl)zirkondichlorid
Isopropyl(9-(2,7-ditertbutylfluorenyl))(cyclopentadienyl)zirkondichlorid
Isopropyl(9-fluorenyl)(1-(3-methylcyclopentadienyl))zirkondichlorid
Isopropyl(9-fluorenyl)(1-(3 -isopropylcyclopentadienyl))zirkondichlorid
Dimethylsilyl(9-fluorenyl)(1-(3-methylcyclopentadienyl))zirkondichlorid
Dimethylsilyl(9-fluorenyl)(1-(3-isopropylcyclopentadienyl))zirkondichlorid
Isopropyl(9-fluorenyl)(1-indenyl)zirkondichlorid
Dimethylsilyl(9-fluorenyl)(1-indenyl)zirkondichlorid
eingesetzt werden.

9. Verfahren nach Anspruch 5, dadurch gekennzeichnet, daß als Cokatalysator ein Aluminoxan der Formel VII 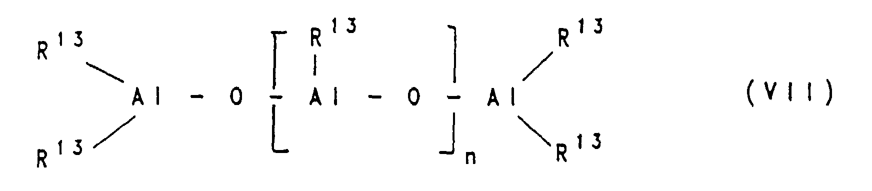 für den linearen Typ und/oder der Formel VIII 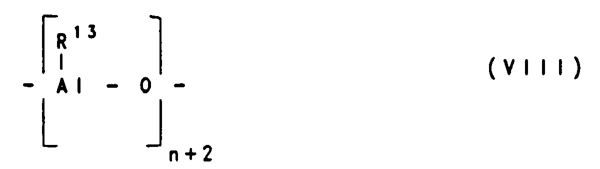 für den cyclischen Typ verwendet werden, worin R¹³ eine C₁-C₆-Alkylgruppe, vorzugsweise Methyl, Ethyl oder Isobutyl, Butyl oder Neopentyl, oder Phenyl oder Benzyl bedeutet, besonders bevorzugt ist Methyl, n ist eine ganze Zahl von 2 bis 50, bevorzugt 5 bis 40.

## Claims

1. A process for preparing cycloolefin polymers from cyclic and acyclic olefin monomers using a catalyst system in a reaction space, which comprises separating the residence time of the monomers in the reaction space from the residence time of the catalyst system in the reaction space, wherein the separation of the residence times of the monomers and of the catalyst system is achieved by fixing the catalyst system on a support and by installing a porous partition in the reaction space.

2. The process as claimed in claim 1, wherein the fixing of the catalyst and/or of the cocatalyst on the support is carried out under the action of microwaves.

3. The process as claimed in claim 1, wherein the average porosity of the partition lies between 0.1 and 50 µm, preferably between 0.25 and 20 µm and particularly preferably between 2 and 10 µm.

4. The process as claimed in claim 1, wherein the support materials used are silica gels, aluminum oxides, solid aluminoxane or other inorganic support materials such as, for example, magnesium chloride or a partly crystalline polyolefin powder which is insoluble under the polymerization conditions and is in finely divided form.

5. The process as claimed in claim 1, wherein the catalyst system comprises at least one metallocene catalyst and at least one cocatalyst.

6. The process as claimed in claim 1, wherein the monomers used are from 0.1 to 99.9% by weight, based on the total amount of monomers, of at least one monomer of the formulae I, II, III or IV 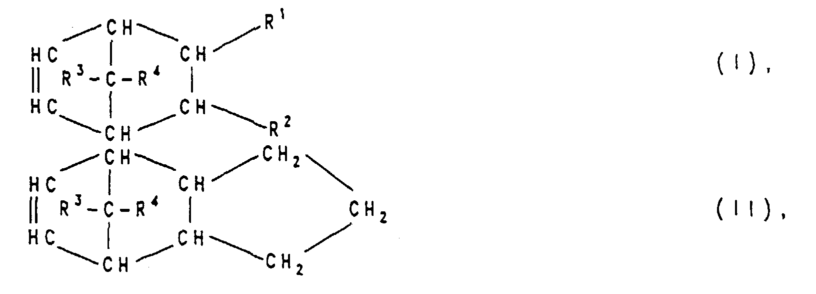 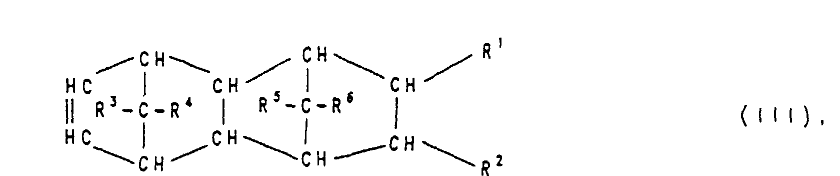 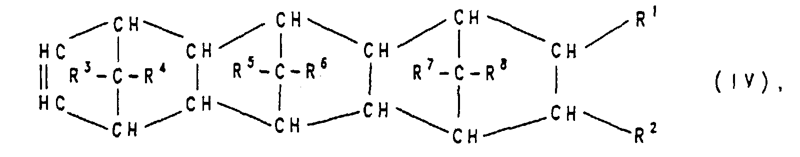 in which R¹, R², R³, R⁴, R⁵, R⁶, R⁷ and R⁸ are identical or different and are a hydrogen atom or a C₁-C₈-alkyl radical or aryl radical, where identical radicals in the various formulae may have different meanings,
from 0 to 99.9% by weight, based on the total amount of monomers, of a cycloolefin of the formula V 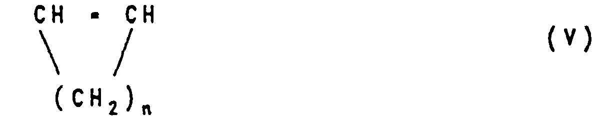 in which n is a number from 2 to 10, and
from 0.1 to 99.9% by weight, based on the total amount of monomers, of at least one acyclic 1-olefin of the formula VI 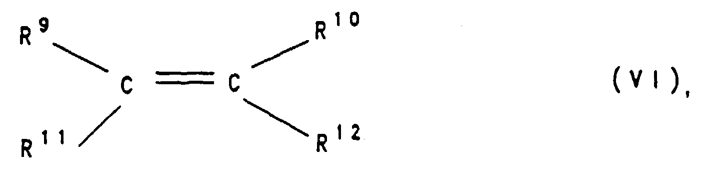 in which R⁹, R¹⁰, R¹¹ and R¹² are identical or different and are a hydrogen atom or a C₁-C₈-alkyl radical, [lacuna] in solution, in suspension, in the liquid cycloolefin monomer or cycloolefin monomer mixture or in the gas phase, at a temperature from -78 to 150°C, at a pressure from 0.5 to 64 bar, in the presence of a supported catalyst system which comprises at least one aluminoxane of the formula VII 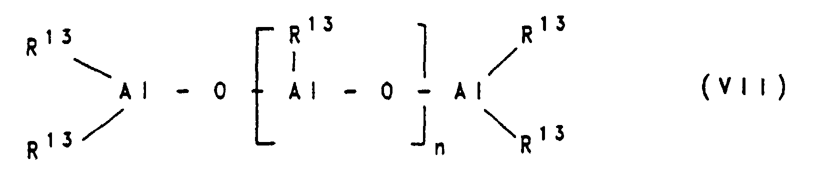 for the linear type and/or of the formula VIII 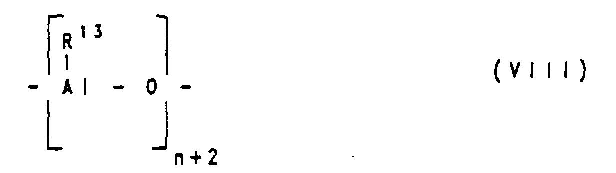 for the cyclic type, wherein in the formulae VII and VIII R¹³ is a C₁-C₆-alkyl group or phenyl or benzyl and n is an integer from 2 to 50, and at least one metallocene compound of the formula IX 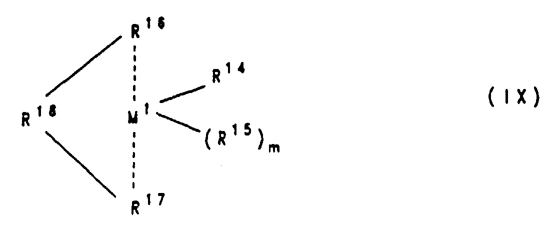 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group, and
m can be one or two, depending on the valency of the central atom M¹,
R₁₈ is 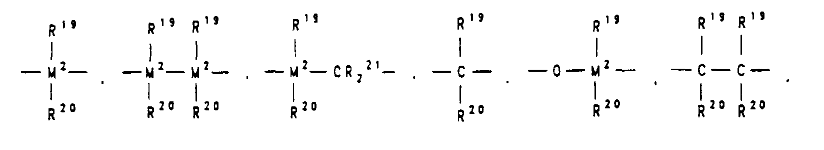 = BR¹⁹, = AlR¹⁹, -Ge-, -Sn-, -O-, -S-, = SO, = SO₂, = NR¹⁹, = CO, = PR¹⁹ or = P(O)R¹⁹, where R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹⁹ and R²⁰ or R¹⁹ and R²¹ in each case form a ring with the atoms connecting them,
M² is silicon, germanium or tin,
R¹⁶ and R¹⁷ are identical or different and are a mononuclear or multinuclear hydrocarbon radical which can form a sandwich structure with the central atom M¹.

7. The process as claimed in claim 6, wherein the metallocene catalyst corresponds to a metallocene of the formula IX, in which M¹ is a metal selected from the group comprising titanium, zirconium, hafnium, vanadium, niobium and tantalum, preferably zirconium and hafnium.
R¹⁴ and R¹⁵ are identical or different and are a hydrogen atom, a C₁-C₁₀-, preferably
C₁-C₃-alkyl group, a C₁-C₁₀-, preferably
C₁-C₃-alkoxy group, a C₆-C₁₀-, preferably
C₆-C₈-alkyl group, a C₆-C₁₀-, preferably
C₆-C₈-aryloxy group, a C₂-C₁₀-, preferably
C₂-C₄-alkenyl group, a C₇-C₄₀, preferably
C₇-C₁₀-arylalkyl group, a C₇-C₄₀-, preferably
C₇-C₁₂-alkylaryl group, a C₈-C₄₀-, preferably
C₈-C₁₂-arylalkenyl group or a halogen atom, preferably chlorine,
m can be one or two, depending on the valency of the central atom M¹,
R¹⁶ and R¹⁷ are identical or different and are a mononuclear or multinuclear hydrocarbon radical which can form a sandwich structure with the central atom M¹,
R¹⁸ is a single-membered or multi-membered bridge which links the radicals R¹⁶ and R¹⁷ and is 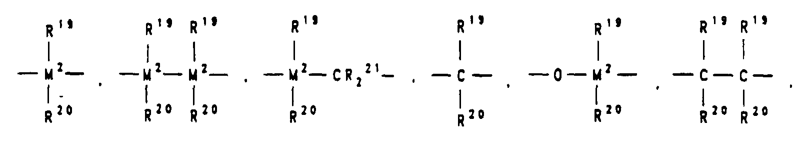 = BR¹⁹, = AlR¹⁹, -Ge-, -Sn-, -O-, -S-, = SO, = SO₂, = NR¹⁹, = CO, - PR¹⁹ or = P(O2)R¹⁹, where R¹⁹, R²⁰ and R²¹ are identical or different and are a hydrogen atom, a halogen atom, preferably chlorine, a C₁-C₁₀-preferably C₁-C₃-alkyl group, in particular a methyl group, a C₁-C₁₀-fluoroalkyl group, preferably a CF₃ group, a C₆-C₁₀-fluoroaryl group, preferably a pentafluorophenyl group, a C₆-C₁₀-, preferably C₆-C₈-aryl group, a C₁-C₁₀-, preferably C₁-C₄-alkoxy group, in particular a methoxy group, a C₂-C₁₀-, preferably C₂-C₄-alkenyl group, a C₇-C₄₀, preferably C₇-C₁₀-arylalkyl group, a C₈-C₄₀, preferably C₈-C₁₂-arylalkenyl group or a C₇-C₄₀, preferably C₇-C₁₂-alkylaryl group, or R¹⁹ and R²⁰ or R¹⁹ and R²¹ in each case form a ring together with the atoms connecting them,
M² is silicon, germanium or tin, preferably silicon or germanium,
R¹⁸ is preferably =CR¹⁹R²⁰, =SiR¹⁹R²⁰, =GeR¹⁹R²⁰, -O-, -S-, =SO, =PR¹⁹ or =P(O)R¹⁹.

8. The process as claimed in at least one of claims 6 and 7, wherein the metallocenes used are
biscyclopentadienylzirconium dichloride
biscyclopentadienylzirconium dimethyl
biscyclopentadienylzirconium diphenyl
biscyclopentadienylzirconium dibenzyl
biscyclopentadienylzirconium bistrimethylsilyl
bis(methylcyclopentadienyl)zirconium dichloride
bis(1,2-dimethylcyclopentadienyl)zirconium dichloride
bis(1,3-dimethylcyclopentadienyl)zirconium dichloride
bis(1,2,4-trimethylcyclopentadienyl)zirconium dichloride
bis(pentamethylcyclopentadienyl)zirconium dichloride
bis(ethylcyclopentadienyl)zirconium dichloride
bis(propylcyclopentadienyl)zirconium dichloride
bis(butylcyclopentadienyl)zirconium dichloride
bisfluorenylzirconium dichloride
bisindenylzirconium dichloride
diphenylmethylene(9-fluorenyl)(cyclopentadienyl)zirconium dichloride
diphenylmethylene(9-fluorenyl)(cyclopentadienyl)hafnium dichloride
dimethylsilyl-bis(cyclopentadienyl)zirconium dichloride
dimethylsilyl(9-fluorenyl)(cyclopentadienyl)zirconium dichloride
dimethylsilyl(9-fluorenyl)(cyclopentadienyl)hafnium dichloride
isopropylidene(9-fluorenyl)(cyclopentadienyl)zirconium dichloride
isopropylidene(9-fluorenyl)(cyclopentadienyl)hafnium dichloride
dimethylsilyl-bis(9-fluorenyl)zirconium dichloride
dimethylsilyl-bis-1-tetrahydroindenylzirconium dichloride
dimethylsilyl-bis-1-(2-methyl-tetrahydroindenyl)zirconium dichloride
dimethylsilyl-bis-1-(2,3,5-trimethyl-cyclopentadienyl)zirconium dichloride
dimethylsilyl-bis-1-(2,3-dimethyl-cyclopentadienyl)zirconium dichloride
dimethylsilyl-bis-1-indenylzirconium dichloride
dimethylsilyl-bis-1-indenylzirconium dimethyl dimethylgermyl-bis-1-indenylzirconium dichloride
dimethylsilyl-bis-1-(2-methylindenyl)zirconium dichloride
dimethylsilyl-bis-1-(2-methyl-4-isopropylindenyl)zirconium dichloride
phenylmethylsilyl-bis-1-(2-methylindenyl)zirconium dichloride
dimethylsilyl-bis-1-(2-methyl-4-ethylindenyl)zirconium dichloride
ethylene-bis-1-(4,7-dimethylindenyl)zirconium dichloride
phenyl(methyl)silyl-bis-1-indenylzirconium dichloride
phenyl(vinyl)silyl-bis-1-indenylzirconium dichloride
diphenylsilyl-bis-1-indenylzirconium dichloride
dimethylsilyl-bis-1-(2-methyl-4-tert.butylindenyl)zirconium dichloride
methylphenylsilyl-bis-1-(2-methyl-4-isopropylindenyl)zirconium dichloride
dimethylsilyl-bis-1-(2-ethyl-4-methylindenyl)zirconium dichloride
dimethylsilyl-bis-1-(2,4-dimethylindenyl)zirconium dichloride
dimethylsilyl-bis-1-(2-methyl-4-ethylindenyl)zirconium dimethyl
dimethylsilyl-bis-1-(2-methyl-4,6-diisopropylindenyl)zirconium dichloride
dimethylsilyl-bis-1-(2,4,6-trimethylindenyl)zirconium dichloride
methylphenylsilyl-bis-1-(2-methyl-4,6-diisopropylindenyl)zirconium dichloride
1,2-ethanediyl-bis-1-(2-methyl-4,6-diisopropylindenyl)zirconium dichloride
dimethylsilyl-bis-1-(2-methyl-4,5-benzoindenyl)zirconium dichloride
dimethylsilyl-bis-1-(2-methyl-4-phenylindenyl)zirconium dichloride
ethylene-bis(1-indenyl)zirconium dichloride
ethylene-bis-1-(4,5,6,7-tetrahydroindenyl)zirconium dichloride
ethylene-bis(1-indenyl)hafnium dichloride
dimethylsilyl-bis-1-(4,5-benzoindenyl)zirconium dichloride
isopropyl-(cyclopentadienyl)(1-indenyl)zirconium dichloride
isopropyl-(3-methylcyclopentadienyl)(1-indenyl)zirconium dichloride
dimethylsilyl-(cyclopentadienyl)(1-indenyl)zirconium dichloride
dimethylsilyl-bis(3-methylcyclopentadienyl)zirconium dichloride
dimethylsilyl-bis(2,4-dimethylcyclopentadienyl)zirconium dichloride
methylethylene-bis(1-indenyl) zirconium dichloride
methylphenylcarbyl(9-fluorenyl)(cyclopentadienyl)zirconium dichloride
diphenylsilyl(9-fluorenyl)(cyclopentadienyl)zirconium dichloride
dimethylsilyl(9-(2,7-ditertbutylfluorenyl)) (cyclopentadienyl)zirconium dichloride
diphenylcarbyl (9- (2,7-ditertbutylfluorenyl)) (cyclopentadienyl)zirconium dichloride
isopropyl(9-(2,7-ditertbutylfluorenyl)) (cyclopentadienyl)zirconium dichloride
isopropyl(9-fluorenyl)(1-(3-methylcyclopentadienyl))zirconium dichloride
isopropyl(9-fluorenyl)(1-(3-isopropylcyclopentadienyl))zirconium dichloride
dimethylsilyl(9-fluorenyl)(1-(3-methylcyclopentadienyl))zirconium dichloride
dimethylsilyl(9-fluorenyl)(1-(3-isopropylcyclopentadienyl))zirconium dichloride
isopropyl(9-fluorenyl)(1-indenyl)zirconium dichloride
dimethylsilyl(9-fluorenyl)(1-indenyl)zirconium dichloride.

9. The process as claimed in claim 5, wherein the cocatalyst used is an aluminoxane of the formula VII 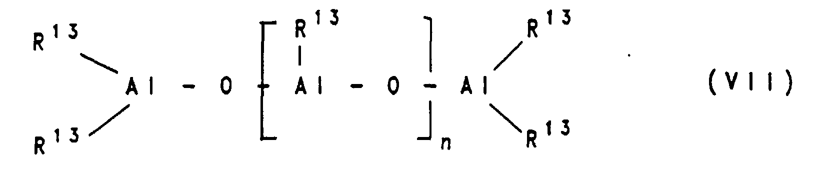 for the linear type and/or of the formula VIII 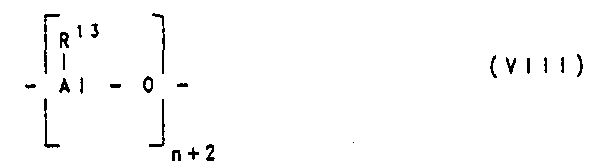 for the cyclic type, in which R¹³ is a C₁-C₆-alkyl group, preferably methyl, ethyl or isobutyl, butyl or neopentyl, or phenyl or benzyl, and is particularly preferably methyl, n is an integer from 2 to 50, preferably from 5 to 40.

## Revendications

1. Procédé pour la fabrication de polymères de cyclooléfine à partir de monomères d'oléfines cyclique et acycliques en utilisant un système de catalyseur dans une chambre de réaction, caractérisé en ce que le temps de séjour des monomères dans la chambre de réaction est séparé du temps de séjour du système de catalyseur dans la chambre de réaction, la séparation des temps de séjour des monomères et du système de catalyseur étant obtenue par la fixation du système de catalyseur sur un support et par la mise en place d'une cloison poreuse dans la chambre de réaction.

2. Procédé selon la revendication 1, caractérisé en ce que la fixation du catalyseur et/ou du support sur le support s'effectue sous l'action de micro-ondes.

3. Procédé selon la revendication 1, caractérisé en ce que la porosité moyenne de la cloison est comprise entre 0,1 et 50 µm, de préférence entre 0,25 et 20 µm et plus particulièrement de préférence entre 2 et 10 µm.

4. Procédé selon la revendication 1, caractérisé en ce qu'en tant que supports sont utilisés des gels de silice, des oxydes d'aluminium, l'aluminoxane solide, ou d'autres supports inorganiques, tels que par exemple le chlorure de magnésium ou une poudre de polyoléfine semi-cristalline, insoluble dans des conditions de polymérisation et se présentant sous forme finement divisée.

5. Procédé selon la revendication 1, caractérisé en ce que le système de catalyseur se compose au moins d'un catalyseur de métallocène et au moins d'un cocatalyseur.

6. Procédé selon la revendication 1,
caractérisé en ce qu'on utilise en tant que monomères, 0,1 à 99,9 % en poids, par rapport à la quantité totale des monomères, d'au moins un monomère des formules I, II, III ou IV 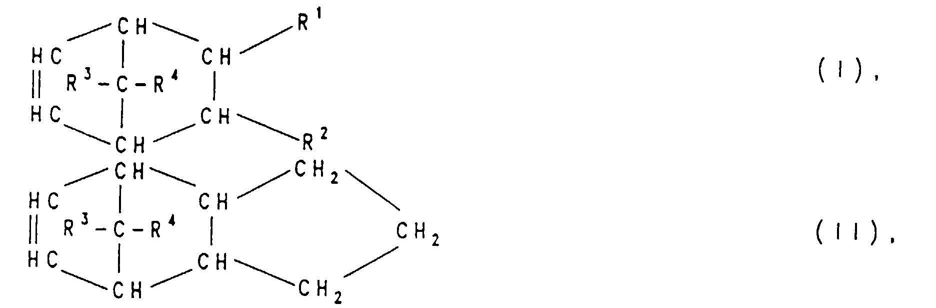 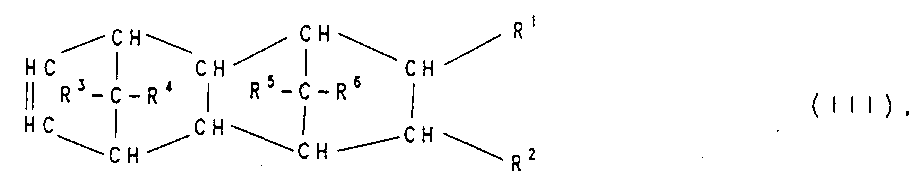 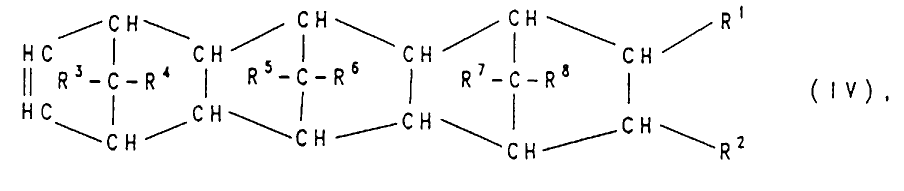 dans lesquelles R¹, R², R³, R⁴, R⁵, R⁶, R⁷ et R⁸ sont identiques ou différents et représentent un atome d'hydrogène ou un résidu d'alkyle ou un résidu d'aryle en C₁-C₈, les mêmes résidus pouvant avoir une signification différente dans les diverses formules, 0 à 99,9 % en poids, par rapport à la quantité totale des monomères, d'au moins une cyclo-oléfine de la formule V 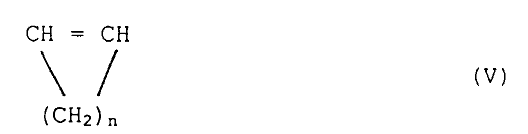 dans laquelle n est un nombre de 2 à 10, et 0,1 à 99,9 % en poids, par rapport à la quantité totale des monomères, d'au moins une 1-oléfine acyclique de la formule VI 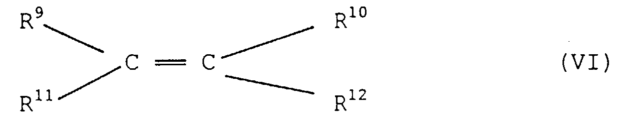 dans laquelle R⁹, R¹⁰, R¹¹ et R¹² sont identiques ou différents et représentent un atome d'hydrogène ou un résidu d'alkyle en C₁-C₈, dans laquelle la polymérisation se déroule en solution, en suspension, dans le monomère liquide de cyclo-oléfine ou le mélange de monomères de cyclo-oléfine ou en phase gazeuse, à une température de -78 à 150°C, à une pression de 0,5 à 64 bar, en présence d'un système de catalyseur porté, qui se compose d'au moins un aluminoxane de la formule VII 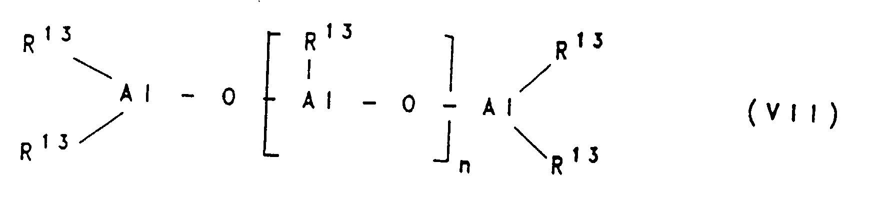 pour le type linéaire et/ou de la formule VIII 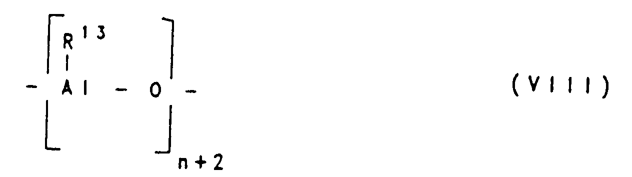 pour le type cyclique, dans les formules VII et VIII, R¹³ représentant un groupe alkyle en C₁-C₆ ou un groupe
phényle ou un groupe benzyle et n étant un nombre entier de 2 à 50, et d'au moins un composé de métallocène de la formule IX 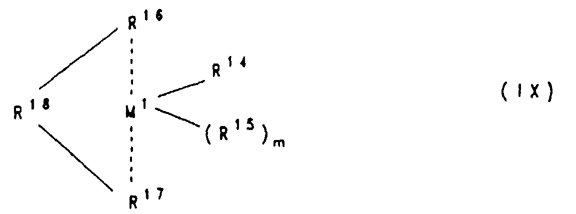 dans laquelle
M¹ est du titane, du zirconium, du hafnium, du vanadium, du niobium ou du tantale,
R¹⁴ et R¹⁵ sont différents ou identiques et représentent un atome d'hydrogène, un atome d'halogène, un groupe alkyle en C₁-C₁₀, un groupe alkoxy en C₁-C₁₀, un groupe aryle en C₆-C₁₀, un groupe aryloxy en C₆-C₁₀, un groupe alkényle en C₂-C₁₀, un groupe arylalkyle en C₇-C₄₀, un groupe alkylaryle en C₇-C₄₀ ou un groupe arylalkényle en C₈-C₄₀,
m peut être un ou deux, selon la valence de l'atome central M¹,
R₁₈ 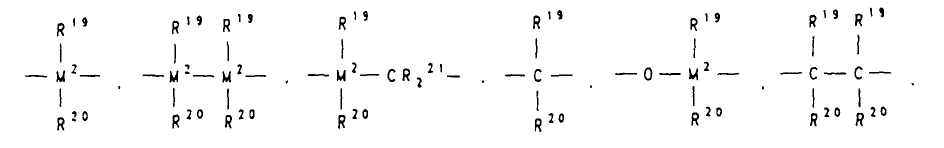 = BR¹⁹,= AIR¹⁹, -Ge-, -Sn-, -O-, -S-, = SO, = SO₂, = NR¹⁹, = CO, = PR¹⁹ ou = P(O)R¹⁹, R¹⁹, R²⁰ et R²¹ étant identiques ou différents et représentant un atome d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alkoxy en C₁-C₁₀, un groupe alkényle en C₂-C₁₀, un groupe arylalkyle en C₇-C₄₀, un groupe arylalkényle en C₈-C₄₀ ou un groupe alkylaryle en C₇-C₄₀ ou R¹⁹ et R²⁰ ou R¹⁹ et R²¹ formant chacun un anneau avec les atomes les reliant, M² est du silicium, du germanium ou de l'étain, R¹⁶ et R¹⁷ sont identiques ou différents et représentent un résidu d'hydrocarbure mononucléaire ou polynucléaire qui peut former avec l'atome central M¹ une structure en sandwich.

7. Procédé selon la revendication 6, caractérisé en ce que le catalyseur de métallocène correspond à un métallocène de la formule IX, dans laquelle M¹ est un métal du groupe comprenant le titane, le zirconium, l'hafnium, le vanadium, le niobium et le tantale, de préférence le zirconium et l'hafnium,
R¹⁴ et R¹⁵ sont identiques ou différents et représentent un atome d'hydrogène, un groupe alkyle en C₁-C₁₀, de préférence en C₁-C₃, un groupe alkoxy en C₁-C₁₀, de préférence en C₁-C₃, un groupe aryle en C₆-C₁₀, de préférence en C₆-C₈, un groupe aryloxy en C₆-C₁₀, de préférence en C₆-C₈, un groupe alkényle en C₂-C₁₀, de préférence en C₂-C₄, un groupe arylalkyle en C₇-C₄₀, de préférence en C₇-C₁₀, un groupe alkylaryle en C₇-C₄₀, de préférence en C₇-C₁₂, un groupe arylalkényle en C₈-C₄₀, de préférence en C₈-C₁₂, ou un atome d'halogène de préférence du chlore,
m peut être un ou deux, selon la valence de l'atome central M₁,
R¹⁶ et R¹⁷ sont identiques ou différents et représentent un résidu d'hydrocarbure mononucléaire ou polynucléaire qui peut former avec l'atome central M¹ une structure en sandwich,
R¹⁸ est un pont à branche unique ou à branches multiples, qui accouple les résidus R¹⁶ et R¹⁷ et représente 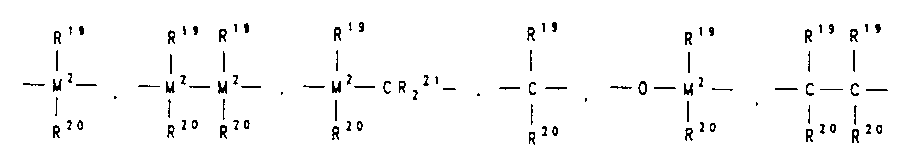 = BR¹⁹,= AIR¹⁹, -Ge-, -Sn-, -O-, -S-, = SO, = SO₂, = NR¹⁹, = CO, = PR¹⁹ ou = P(O)R¹⁹, R¹⁹, R²⁰ et R²¹ étant identiques ou différents et représentant un atome d'hydrogène, un atome d'halogène, de préférence du chlore, un groupe alkyle en C₁-C₁₀, de préférence en C₁-C₃, en particulier un groupe méthyle, un groupe fluoralkyle en C₁-C₁₀, de préférence un groupe CF₃, un groupe fluoraryle en C₆-C₁₀, de préférence un groupe pentafluorphényle, un groupe aryle en C₆-C₁₀, de préférence en C₆-C₈, un groupe alkoxy en C₁-C₁₀, de préférence en C₁-C₄, en particulier un groupe méthoxy, un groupe alkényle en C₂-C₁₀, de préférence en C₂-C₄, un groupe arylalkyle en C₇-C₄₀, de préférence en C₇-C₁₀, un groupe arylalkényle en C₈-C₄₀, de préférence en C₈-C₁₂ ou un groupe alkylaryle en C₇-C₄₀ de préférence en C₇-C₁₂ ou R¹⁹ et R²⁰ ou R¹⁹ et R²¹ formant ensemble respectivement un anneau avec les atomes les reliant,
M² est du silicium, du germanium ou de l'étain, de préférence du silicium ou du germanium,
R¹⁸ représente, de préférence, =CR¹⁹R²⁰, =SIR¹⁹R²⁰, =Ger¹⁹R²⁰,-O-, -S-, = SO, = PR¹⁹ ou = P(O)R¹⁹.

8. Procédé selon au moins l'une des revendications 6 et 7, caractérisé en ce que sont utilisés en tant que metallocènes :
le dichlorure de biscyclopentadiénylzirconium
le diméthyle de biscyclopentadiénylzirconium
le diphényle de biscyclopentadiénylzirconium
le dibenzyle de biscyclopentadiénylzirconium
le bistriméthylsilyle de biscyclopentadiénylzirconium
le dichlorure de bis(méthylcyclopentadiényl)zirconium
le dichlorure de bis(1,2-diméthylcyclopentadiényl)zirconium
le dichlorure de bis(1,3-diméthylcyclopentadiényl)zirconium
le dichlorure de bis(1,2,4-triméthylcyclopentadiényl)zirconium
le dichlorure de bis(pentaméthylcyclopentadiényl)zirconium
le dichlorure de bis(éthylcyclopentadiényl)zirconium
le dichlorure de bis(propylcyclopentadiényl)zirconium
le dichlorure de bis(butylcyclopentadiényl)zirconium
le dichlorure de bisfluorénylzirconium
le dichlorure de bisindénylzirconium
le dichlorure de diphénylméthylène(9-fluorényl)(cyclopentadiényl)zirconium
le dichlorure de diphénylméthylène(9-fluorényl)(cyclopentadiényl)hafnium
le dichlorure de diméthylsilyl-bis-(cyclopentadiényl)zirconium
le dichlorure de dinéthylsilyl(9-fluorényl)(cyclopentadiényl)zirconium
le dichlorure de diméthylsilyl(9-fluorényl)(cyclopentadiényl)hafnium
le dichlorure d'isopropylidène(9-fluorényl)(cyclopentadiényl)zirconium
le dichlorure d'isopropylidène(9-fluorényl)(cyclopentadiényl)hafnium
le dichlorure de diméthysilyl-bis-(9-fluorényl)zirconium
le dichlorure de diméthylsilyl-bis-1-tétrahydroindénylzirconium
le dichlorure de diméthylsilyl-bis-1-(2-méthyltétrahydroindényl)zirconium
le dichlorure de diméthylsilyl-bis-1-(2,3,5-triméthylcyclopentadiényl)zirconium
le dichlorure de diméthylsilyl-bis-1-(2,3-diméthylcyclopentadiényl)zirconium
le dichlorure de diméthylsilyl-bis-1-indénylzirconium
le diméthyle de diméthylsilyl-bis-1-indénylzirconium
le dichlorure de diméthylgemyl-bis-1-indénylzirconium
le dichlorure de diméthylsilyl-bis-1-(2-méthyl-indényl)zirconium
le dichlorure de diméthylsilyl-bis-1-(2-méthyl-4-isopropylindényl)zirconium
le dichlorure de phénylméthylsilyl-bis-1-(2-méthyl-indényl)zirconium
le dichlorure de diméthylsilyl-bis-1-(2-méthyl-4-éthylindényl)zirconium
le dichlorure d'éthylène-bis-1-(4,7-diméthyl-indényl)zirconium
le dichlorure de phényl(méthyl)silyl-bis-1-indénylzirconium
le dichlorure de phényl(vinyl)silyl-bis-1-indénylzirconium
le dichlorure de diphénylsilyl-bis-1-indénylzirconium
le dichlorure de diméthylsilyl-bis-1-(2-méthyl-4-butylindényl tertiaire)zirconium
le dichlorure de méthylphénylsilyl-bis-1-(2-méthyl-4-isopropylindényl)zirconium
le dichlorure de diméthylsilyl-bis-1-(2-éthyl-4-méthylindényl)zirconium
le dichlorure de diméthylsilyl-bis-1-(2,4-diméthylindényl)zirconium
le diméthyle de diméthylsilyl-bis-1-(2-méthyl-4-éthylindényl)zirconium
le dichlorure de diméthylsilyl-bis-1-(2-méthyl-4,6-diisopropylindényl)zirconium
le dichlorure de diméthylsilyl-bis-1-(2,4,6-triméthylindényl)zirconium
le dichlorure de méthylphénylsilyl-bis-1-(2-éthyl-4,6-diisopropylindényl)zirconium
le dichlorure de 1,2-éthandiyl-bis-1-(2-méthyl-4,6-diisopropylindényl)zirconium
le dichlorure de diméthylsilyl-bis-1-(2-méthyl-4,5-benzoindényl)zirconium
le dichlorure de diméthylsilyl-bis-1-(2-méthyl-4-phénylindényl)zirconium
le dichlorure d'éthylène-bis-(1-indényl)zirconium
le dichlorure d'éthylène-bis-1-(4,5,6,7-tétrahydroindényl)zirconium
le dichlorure d'éthylène-bis-(1-indényl)hafnium
le dichlorure de diméthylsilyl-bis-1-(4,5-benzoindényl)zirconium
le dichlorure d'isopropyl-(cyclopentadiényl)(1-indényl)zirconium
le dichlorure d'isopropyl-(3-méthylcyclopentadiényl)(1-indényl)zirconium
le dichlorure de diméthylsilyl-(cyclopentadiényl)(1-indényl)zirconium
le dichlorure de diméthylsilyl-bis-(3-méthylcyclopentadiényl)zirconium
le dichlorure de diméthylsilyl-bis-(2,4-diméthylcyclopentadiényl)zirconium
le dichlorure de méthyléthylène-bis-(1-indényl)zirconium
le dichlorure de méthylphénylcarbyl(9-fluorényl)(cyclopentadiényl)zirconium
le dichlorure de diphénylsilyl(9-fluorényl)(cyclopentadiényl)zirconium
le dichlorure de diméthylsilyl(9-(2,7-ditertbutylfluorényl))(cyclopentadiényl)zirconium
le dichlorure de diphénylcarbyl(9-(2,7-ditertbutylfluorényl))(cyclopentadiényl)zirconium
le dichlorure d'isopropyl((9-(2,7-ditertbutylfluorényl))(cyclopentadiényl)zirconium
le dichlorure d'isopropyl(9-fluorényl)(1-(3-méthylcyclopentadiényl)zirconium
le dichlorure d'isopropyl(9-fluorényl)(1-(3-isopropylcyclopentadiényl)zirconium
le dichlorure de diméthylsilyl(9-(fluorényl)(1-(3-méthylcyclopentadiényl)zirconium
le dichlorure de diméthylsilyl(9-(fluorényl)(1-(3-isopropylcyclopentadiényl)zirconium
le dichlorure d'isopropyl(9-fluorényl)(1-indényl)zirconium
le dichlorure de diméthylsilyl(9-(fluorényl)(1-indényl)zirconium

9. Procédé selon la revendication 5, caractérisé en ce que le cocatalyseur utilisé est un aluminoxane de la formule VII 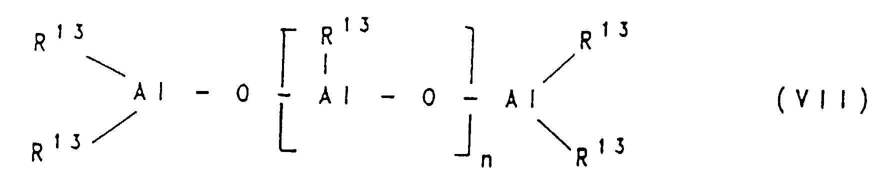 pour le type linéaire et/ou de la formule VIII 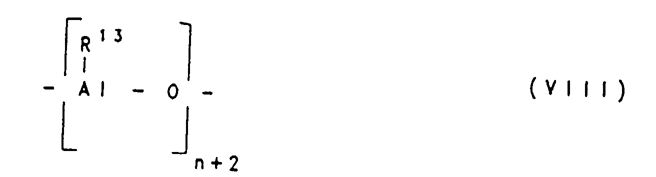 pour le type cyclique. Dans ces formules, R¹³ représente un groupe alkyle en C₁-C₆, de préférence un groupe méthyle, un groupe éthyle ou un groupe isobutyle, un groupe butyle ou un groupe néopentyle, ou un groupe phényle, ou un groupe benzyle, un groupe méthyle étant particulièrement préféré, n étant un nombre entier de 2 à 50, de préférence de 5 à 40.
